# EUROPEAN PATENT APPLICATION

(11) **EP 4 654 014 A1**
(43) Date of publication of application: **26.11.2025**
(21) Application number: 24752920.9
(22) Date of filing: 08.02.2024
(51) Int. Cl.: G06F 9/50

(54) **CLOUD RESOURCE CAPACITY MANAGEMENT METHOD AND CLOUD MANAGEMENT PLATFORM**

(30) Priority: 11.02.2023 CN 202310100929; 15.05.2023 CN 202310544790
(71) Applicant: Huawei Cloud Computing Technologies Co., Ltd., Guiyang, Guizhou 550025 (CN)
(72) Inventor: MA, Shijia, Shenzhen, Guangdong 518129 (CN); LI, Hao, Shenzhen, Guangdong 518129 (CN); XIONG, Zhanying, Shenzhen, Guangdong 518129 (CN)
(74) Representative: Goddar, Heinz J.
(86) International application number: PCT/CN2024/076872
(87) International publication number: WO 2024/165066

(57) **Abstract**

The present invention discloses a cloud resource capacity management method and a cloud management platform. The method is applied to the cloud management platform, the cloud management platform is configured to manage an infrastructure, and the infrastructure includes a plurality of hosts. The cloud management platform is configured to determine scenario information entered by a tenant, and the cloud management platform determines, based on the scenario information including a scenario requirement of a to-be-created virtual instance, a host that is in the plurality of hosts in the infrastructure and that is capable of meeting the scenario requirement entered by the tenant, and before receiving a virtual instance creation instruction entered by the tenant for the virtual instance, prompts the tenant with availability information of an instance on the host that meets the scenario requirement. Through application of this technical solution, in scenarios such as instance creation and resource reservation, availability information of an instance on a host that meets a requirement can be updated in a timely and accurate manner based on a differentiated scenario and a multi-dimensional combination scenario that are entered by a tenant, and displayed to the tenant, to improve resource transparency.

## Description

This application claims priority to Chinese Patent Application No. 202310100929.0, filed with the China National Intellectual Property Administration on February 11, 2023 and entitled "CLOUD RESOURCE CAPACITY MANAGEMENT METHOD AND CLOUD MANAGEMENT PLATFORM", which is incorporated herein by reference in its entirety.

This application claims priority to Chinese Patent Application No. 202310544790.9, filed with the China National Intellectual Property Administration on May 15, 2023 and entitled "CLOUD RESOURCE CAPACITY MANAGEMENT METHOD AND CLOUD MANAGEMENT PLATFORM", which is incorporated herein by reference in its entirety.

### TECHNICAL FIELD

This application relates to the field of cloud services, and in particular, to a cloud resource capacity management method and a cloud management platform.

### BACKGROUND

With development of public cloud services, tenants can query corresponding cloud service host resources when creating instances or changing specifications. However, although current capacity query and management technologies can implement resource capacity query and resource reservation based on availability zones and instance specifications, resource capacity query and sellout prompting in multi-dimensional combination scenarios cannot be implemented, and resource reservation and capacity assurance in specified dimensional combination scenarios cannot be supported.

### SUMMARY

To resolve a problem in the conventional technology, embodiments of the present invention provide a cloud resource capacity management method and a cloud management platform, so that information such as a capacity or a sellout of an instance specification can be displayed based on a differentiated scenario or a multi-dimensional combination scenario, and availability information of an instance on a host that meets a scenario requirement can be fed back to a user in a timely and accurate manner in different scenarios such as instance creation and resource reservation.

According to a first aspect, this application provides a cloud resource capacity management method. The method is applied to a cloud management platform, and the cloud management platform is configured to manage a plurality of hosts in an infrastructure. Based on this, the cloud resource capacity management method includes the following steps: The cloud management platform determines scenario information entered by a tenant, where the scenario information includes a scenario requirement of a to-be-created virtual instance. Based on the scenario requirement, the cloud management platform further determines a host capable of meeting the scenario requirement in the plurality of hosts disposed in the infrastructure, and before receiving a virtual instance creation instruction entered by the tenant for the virtual instance, prompts the tenant with availability information of an instance on the host that meets the scenario requirement.

In the solution provided in this application, the cloud management platform may determine, in different manners, the scenario information entered by the tenant. The scenario information includes the scenario requirement required for the to-be-created instance. The cloud management platform may preset scenario information including scenario requirements in different dimensions for the tenant to select, to determine the scenario requirement, or determine the scenario requirement based on the scenario information entered by the tenant, so as to determine the host capable of meeting the scenario requirement in the infrastructure, and prompt the tenant with information about the instance provided by the host. In this way, hosts that meet different scenario requirements of the tenant may be prompted to the tenant based on the scenario requirements, in particular, a host is displayed in a multi-dimensional combination scenario requirement, so that the tenant selects, from these hosts, a host that meets an instance creation requirement to create an instance.

With reference to the first aspect of this application, in a possible implementation of the first aspect, the plurality of hosts are disposed in a same availability zone in the infrastructure, and the infrastructure is provided with a plurality of different availability zones. Based on this, the method is further implemented in the following manner: The cloud management platform determines availability zone information entered by the tenant, where the availability zone information indicates the availability zone selected by the tenant. Therefore, the cloud management platform determines the host capable of meeting the scenario requirement in the plurality of hosts in the infrastructure. Specifically, the cloud management platform determines the host capable of meeting the scenario requirement in the plurality of hosts disposed in the availability zone in the infrastructure.

In the solution provided in this application, the host used to provide the tenant with an instance creation service may be disposed in a plurality of different availability zones in the infrastructure. Further, the tenant may select different availability zones based on a plurality of cases such as a delay to filter a required host, so as to meet a service requirement of the tenant. On this basis, the cloud management platform prompts the availability information of the instance on the host that meets the scenario requirement entered by the tenant, and further provides the tenant with information about a host that meets a service requirement of the tenant in a real scenario.

With reference to the first aspect, in a possible implementation of the first aspect, the cloud management platform determines a reserved instance request entered by the tenant, where the reserved instance request includes a resource pool requirement of the to-be-created virtual instance. In this case, when the cloud management platform determines, based on the scenario requirement, the host that is in the plurality of hosts in the infrastructure and that is capable of meeting the scenario requirement entered by the tenant, the host further needs to meet the resource pool requirement.

In the solution provided in this application, in addition to determining the scenario requirement entered by the tenant, the cloud management platform may determine, in the infrastructure based on the reserved instance request entered by the tenant, a host capable of meeting both the scenario requirement and the resource pool requirement, so that a host in an assurance resource can be determined based on the scenario requirement.

With reference to the first aspect, in a possible implementation of the first aspect, the cloud management platform determines the virtual instance creation instruction entered by the tenant when the tenant determines that the host is available, selects, based on the virtual instance creation instruction, a target host from a plurality of hosts that meet the scenario requirement entered by the tenant, and creates a virtual instance on the target host.

With reference to the first aspect, in a possible implementation of the first aspect, the cloud management platform prompts the tenant with the availability information of the instance on the host before receiving the virtual instance creation instruction entered by the tenant for the virtual instance. When the host is unavailable, the cloud management platform prompts the tenant with a sellout of the instance on the host capable of meeting the scenario requirement.

In the solution provided in this application, when the host that meets the scenario requirement of the tenant is in an available state, it indicates that there is still a resource that meets the scenario requirement of the tenant for the tenant to select, so that the cloud management platform may select the target host based on the virtual instance creation instruction entered by the tenant, and create the virtual instance. The virtual instance creation instruction entered by the tenant may include an instance specification of the virtual instance. Based on the instance specification, the cloud management platform may select the target host based on the resource that can be provided by the host. When the host that meets the scenario requirement of the tenant is in an unavailable state, it indicates that a resource that meets the scenario requirement of the tenant is sold out, and the cloud management platform prompts the tenant with sellout information; or it indicates that there is no resource that can meet the scenario requirement of the tenant, and the cloud management platform prompts the tenant with no resource. According to the technical solution of the present invention, a response to the virtual instance creation request entered by the tenant can be implemented, and in particular, resource information on the host that meets the scenario requirement of the tenant is fed back in a timely manner.

With reference to the first aspect, in a possible implementation of the first aspect, the cloud management platform determines a resource reservation request entered by the tenant, where the resource reservation request includes a resource requirement of the to-be-created virtual instance; and the cloud management platform selects, from the plurality of hosts in the infrastructure, at least one host capable of meeting the scenario requirement, to reserve, for the tenant, a resource that matches the resource requirement.

In the solution provided in this application, a cloud resource is provided elastically. Based on the scenario requirement entered by the tenant, to improve a resource assurance rate, the resource reservation request of the tenant can be further implemented in this technical solution. Specifically, the resource requirement of the to-be-created virtual instance in the resource reservation request entered by the tenant is determined, and the resource that matches the resource requirement is reserved for the tenant in the host that meets the scenario requirement, so that when the tenant creates the to-be-created virtual instance, it is ensured that the matched resource can be used, to improve a resource assurance rate.

With reference to the first aspect, in a possible implementation of the first aspect, the availability information in this application includes one or any combination of sellout information, a host evaluation, capacity information, and a risk identifier.

In the solution provided in this application, the cloud management platform may determine the host based on the scenario requirement entered by the tenant, and prompt the tenant with information about instances of different specifications or a same specification that are provided by the host. The availability information of the instance on the host includes sellout information of the instance, an evaluation of the host on which the instance is located, capacity information of the instance, and a risk identifier of the instance, to improve an understanding of the tenant on the host on which the to-be-created virtual instance is located and a status of the instance. Detailed information such as the host evaluation and the availability is displayed, so that the tenant can intuitively learn about host information that matches the scenario requirement. This helps improve host resource utilization.

With reference to the first aspect, in a possible implementation of the first aspect, the scenario requirement includes one or any combination of a fault domain, a deployment set, a health status of the host, a model of the host, a network type, and a storage type.

With reference to the first aspect, in a possible implementation of the first aspect, the virtual instance includes any one of a virtual machine, a container, a database, a bare metal server, an object storage bucket, an ELB elastic load balancer, a cloud gateway, and a cloud cache.

According to a second aspect, this application provides a cloud resource capacity management method. The method is applied to a cloud management platform, the cloud management platform is configured to manage an infrastructure, the infrastructure includes a plurality of hosts, and the method specifically includes the following steps: The cloud management platform determines scenario information entered by a tenant, where the scenario information includes a scenario requirement of a to-be-created virtual instance. The cloud management platform determines, based on the scenario requirement, a host capable of meeting the scenario requirement in the plurality of hosts in the infrastructure. On this basis, the cloud management platform determines a resource reservation request entered by the tenant, where the resource reservation request includes a resource requirement of the to-be-created virtual instance, and the cloud management platform selects, from the plurality of hosts in the infrastructure, at least one host capable of meeting the scenario requirement, to reserve, for the tenant, a resource that matches the resource requirement.

In the solution provided in this application, to meet a resource reservation requirement of the tenant in a specified scenario, the cloud management platform determines a scenario requirement based on scenario information entered by the tenant, determines a resource requirement of a to-be-created virtual instance based on a resource reservation request entered by the tenant, determines, by matching a host in the infrastructure, a host capable of meeting the scenario requirement, and selects, on this basis, at least one host capable of meeting the scenario requirement to reserve, for the tenant, a resource that matches the resource requirement. In this way, dual requirements on the scenario requirement and the resource reservation of the tenant are implemented, and a resource assurance capability is further improved on a basis of improving a capability of performing host matching based on the scenario requirement entered by the tenant.

With reference to the second aspect, in a possible implementation of the second aspect, the plurality of hosts are disposed in a same availability zone in the infrastructure, and the infrastructure is provided with a plurality of different availability zones. Based on this, the method specifically further includes the following steps: The cloud management platform determines availability zone information entered by the tenant, where the availability zone information indicates the availability zone selected by the tenant; the cloud management platform determines the host capable of meeting the scenario requirement in the plurality of hosts in the infrastructure; and further, the cloud management platform determines the host capable of meeting the scenario requirement in the plurality of hosts disposed in the availability zone in the infrastructure.

In the solution provided in this application, the cloud management platform may further determine, in different availability zones based on the availability zone information entered by the tenant, a host that meets the scenario requirement, to meet service requirements of the tenant for different availability zones, and determine, in the infrastructure based on a multi-dimensional requirement combination of an availability zone requirement and the scenario requirement, a host that meets the requirement.

With reference to the second aspect, in a possible implementation of the second aspect, the scenario requirement includes one or any combination of a fault domain, a deployment set, a health status of the host, a model of the host, a network type, and a storage type.

With reference to the second aspect, in a possible implementation of the second aspect, the virtual instance includes any one of a virtual machine, a container, a database, a bare metal server, an object storage bucket, an ELB elastic load balancer, a cloud gateway, and a cloud cache.

In the solution provided in this application, all resources required by virtual instances such as a virtual machine, a container, a bare metal server, an object storage bucket, an ELB elastic load balancer, a NAT network address translation gateway, and a cloud cache may be entered by the tenant, and the cloud management platform reserves a matched resource based on a resource requirement. The scenario requirement may include one or any combination of the fault domain, the deployment set, the health status of the host, the model of the host, the network type, and the storage type, and may be parsed and combined based on a scenario entered by the tenant.

According to a third aspect, this application provides a cloud management platform. The cloud management platform is configured to manage an infrastructure, the infrastructure includes a plurality of hosts, and the cloud management platform includes an information determining module, a host determining module, and a prompt module. Specifically, the information determining module is configured to determine scenario information entered by a tenant, where the scenario information includes a scenario requirement of a to-be-created virtual instance; the host determining module is configured to determine a host capable of meeting the scenario requirement in the plurality of hosts in the infrastructure; and the prompt module is configured to prompt the tenant with availability information of an instance on the host capable of meeting the scenario requirement before the cloud management platform receives a virtual instance creation instruction entered by the tenant for the virtual instance.

The third aspect or any implementation of the third aspect is an apparatus implementation corresponding to the first aspect or any implementation of the first aspect. A description in the first aspect or any implementation of the first aspect is applicable to the third aspect or any implementation of the third aspect. Details are not described herein again.

According to a fourth aspect, this application provides a cloud management platform. The cloud management platform is configured to manage an infrastructure, the infrastructure includes a plurality of hosts, and the cloud management platform includes an information determining module, a host determining module, a request determining module, and a resource reservation module. Specifically, the information determining module is configured to determine scenario information entered by a tenant, where the scenario information includes a scenario requirement of a to-be-created virtual instance; the host determining module is configured to determine a host capable of meeting the scenario requirement in the plurality of hosts in the infrastructure; the request determining module is configured to determine a resource reservation request entered by the tenant, where the resource reservation request includes a resource requirement of the to-be-created virtual instance; and the resource reservation module is configured to select, from the plurality of hosts in the infrastructure, at least one host capable of meeting the scenario requirement, to reserve, for the tenant, a resource that matches the resource requirement.

The fourth aspect or any implementation of the fourth aspect is an apparatus implementation corresponding to the second aspect or any implementation of the second aspect. A description in the second aspect or any implementation of the second aspect is applicable to the fourth aspect or any implementation of the fourth aspect. Details are not described herein again.

According to a fifth aspect, this application provides a computing device cluster, including at least one computing device. Each computing device includes a processor and a memory. The processor of the at least one computing device is configured to execute instructions stored in the memory of the at least one computing device, so that the computing device cluster performs the method in the first aspect and any implementation of the first aspect or the second aspect and any implementation of the second aspect.

According to a sixth aspect, this application provides a computer program product including instructions. When the instructions are run by a computing device cluster, the computing device cluster is enabled to perform the method in the first aspect and any implementation of the first aspect or the second aspect and any implementation of the second aspect.

According to a seventh aspect, this application provides a computer-readable storage medium, including computer program instructions. When the computer program instructions are executed by a computing device cluster, the computing device cluster performs the method in the first aspect and any implementation of the first aspect or the second aspect and any implementation of the second aspect.

### BRIEF DESCRIPTION OF DRAWINGS

FIG. 1 is a diagram of a scenario of a cloud resource capacity management method and a cloud management platform according to an embodiment of the present invention;
FIG. 2 is a simple flowchart of a cloud resource capacity management method according to an embodiment of the present invention;
FIG. 3 is a diagram of an identification system for a cloud resource capacity management method according to an embodiment of the present invention;
FIG. 4 is a schematic flowchart of a cloud resource capacity management method according to an embodiment of the present invention;
FIG. 5 is another schematic flowchart of a cloud resource capacity management method according to an embodiment of the present invention;
FIG. 6 is another simple flowchart of a cloud resource capacity management method according to an embodiment of the present invention;
FIG. 7 is another schematic flowchart of a cloud resource capacity management method according to an embodiment of the present invention;
FIG. 8 is a diagram of a capacity page of a cloud resource capacity management method according to an embodiment of the present invention;
FIG. 9 is a diagram of another capacity page of a cloud resource capacity management method according to an embodiment of the present invention;
FIG. 10 is a diagram of a structure of a cloud management platform according to an embodiment of the present invention;
FIG. 11 is another diagram of a structure of a cloud management platform according to an embodiment of the present invention;
FIG. 12 is a diagram of a structure of a computing device for a cloud resource capacity management method according to an embodiment of the present invention;
FIG. 13 is a diagram of a structure of a computing device cluster for a cloud resource capacity management method according to an embodiment of the present invention;
FIG. 14 is another diagram of a structure of a computing device cluster for a cloud resource capacity management method according to an embodiment of the present invention; and
FIG. 15 is another diagram of a structure of a computing device cluster for a cloud resource capacity management method according to an embodiment of the present invention.

### DESCRIPTION OF EMBODIMENTS

The following clearly and completely describes technical solutions in embodiments of the present invention with reference to accompanying drawings. It is clear that the described embodiments are merely some but not all embodiments of this application. All other embodiments obtained by persons of ordinary skill in the art based on embodiments of this application without creative efforts shall fall within the protection scope of this application.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It is explicitly and implicitly understood by persons skilled in the art that embodiments described in the specification may be combined with another embodiment.

Reference to "an embodiment", "some embodiments", or the like described in this specification means that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized.

Some terms and related technologies in this application are first described with reference to the accompanying drawings, to help persons skilled in the art have a better understanding.

Tenant: The tenant is a user who rents an infrastructure. The tenant may register an account, through a browser or another client, on a cloud management platform operated by a public cloud service provider. The public cloud service provider records accounts of different tenants, and isolates public cloud services of different tenants based on the accounts.

Cloud management platform: The cloud management platform is a platform provided by a public cloud service provider for interacting with a user. The user may register an account on the cloud management platform and rent a public cloud service by using the account, to become a tenant of the public cloud service. The cloud management platform is further configured to manage an infrastructure, and isolate, based on accounts of different tenants, computing, network, and/or storage resources rented by different tenants.

Virtual instance: The virtual instance is an instance deployed on a host in an availability zone in a region and used to run a public cloud service. The virtual instance is an instance used to provide computing, network, or storage resources. The virtual instance includes but is not limited to a virtual machine, a container, a database, a bare metal server, an object storage bucket, an ELB elastic load balancer, a cloud gateway, a cloud cache, and the like.

Infrastructure: The infrastructure is a facility that supports a cloud computing service, and includes at least one data center. Each data center includes a plurality of servers, and computing instances such as a virtual machine or a container are run on the servers to implement an elastic cloud computing service. For example, when the infrastructure includes a plurality of data centers, the plurality of data centers may be disposed in different geographical regions in a distributed manner, and remote connections between the data centers are implemented through a backbone network.

Region: An infrastructure may be distributed in different geographical regions, and the geographical regions may be referred to as regions.

Availability zone: A region may include a plurality of availability zones, and each availability zone is specifically one or more adjacent data centers. Data centers in different availability zones are isolated from each other in terms of water and electricity.

Reserved instance: The reserved instance means that before a tenant enters a virtual instance creation instruction, a corresponding resource has been reserved in an infrastructure through a cloud management platform, to ensure that a to-be-created virtual instance is created in a reserved resource pool. A target resource pool of the to-be-created virtual instance is determined by entering a reserved instance request on the cloud management platform, and a host that meets a scenario requirement is determined in the resource pool.

Deployment set: When a virtual instance is created in a specified deployment set, the virtual instance and another virtual instance in the same deployment set are strictly scattered by a physical server, to ensure high service availability in abnormal cases such as a hardware fault.

Resource reservation: To ensure that a resource required by a to-be-created virtual instance in a future period of time can be ensured, a tenant enters a resource reservation request through a cloud management platform, to reserve, in an infrastructure, a resource that matches a resource requirement.

Availability information: The availability information is information about instances of different specifications or a same specification that are provided by a host in an infrastructure and that are used to run a public cloud service. The availability information includes a memory, a processor type, a bandwidth, a risk identifier, a sellout identifier, supply reliability, a host evaluation, capacity information, and the like.

Capacity information: The capacity information is information about a quantity of virtual instances that are of a specification and that can be created on a host.

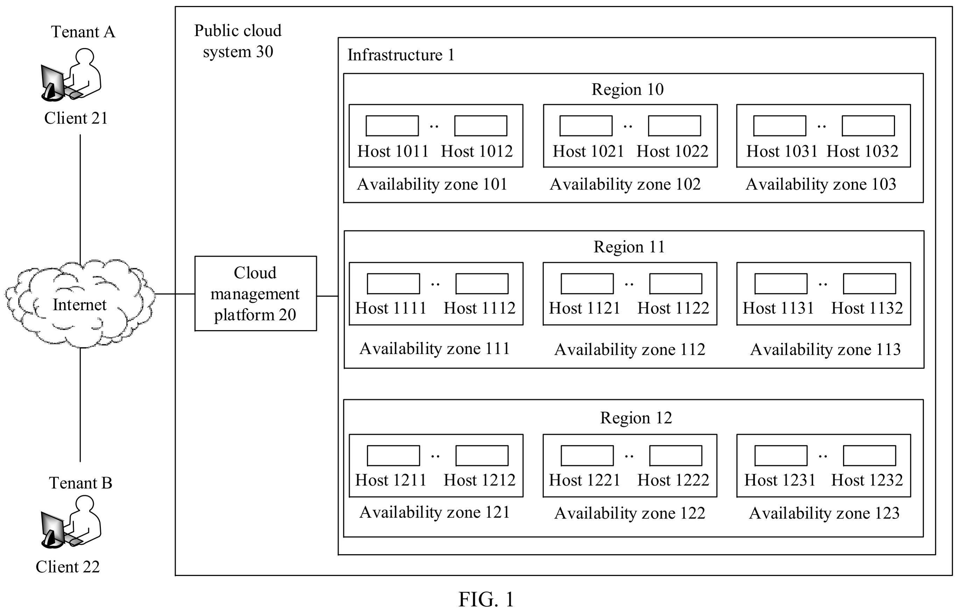

For ease of describing a cloud resource capacity management method in embodiments of the present invention, first refer to FIG. 1. FIG. 1 is a diagram of a scenario of the cloud resource capacity management method according to an embodiment of the present invention. As shown in FIG. 1, a cloud management platform 20 is configured to manage an infrastructure 1. The infrastructure 1 includes availability zones disposed in a plurality of regions. For example, the plurality of regions include a region 10, a region 11, and a region 12, and each region includes a plurality of availability zones. For example, availability zones in the region 10 include an availability zone 101, an availability zone 102, and an availability zone 103. Availability zones located in the region 11 include an availability zone 111, an availability zone 112, and an availability zone 113. An availability zone 121, an availability zone 122, and an availability zone 123 are located in the region 12. Each availability zone further includes a plurality of hosts. For example, the availability zone 101 includes a host 1011 and a host 1012. Based on such an architecture, a public cloud system that provides a cloud service is formed.

Still refer to FIG. 1. In FIG. 1, the cloud management platform 20 is configured to manage the infrastructure 1, and a tenant A is connected to the Internet through a client 21, and logs in to the cloud management platform 20 by using an account that is pre-registered on the cloud management platform 20 and bound to the tenant A. The cloud management platform 20 provides a configuration page, to configure a cloud service running in the infrastructure.

It should be noted that, in this embodiment of the present invention, a quantity of virtual machines may be set as required. This is not limited in embodiments of the present invention.

For example, the client 21 and a client 22 may be terminal devices such as mobile phones, personal computers, personal digital assistants, or thin clients that have a network access function, vehicle-mounted hosts, or other terminal devices that have the network access function.

It can be learned from FIG. 1 that, in a cloud service scenario, the cloud management platform provides the tenant with computing, network, and storage resources provided by a host in the infrastructure, and the tenant may filter and select, through the cloud management platform, an instance specification that matches an actual service requirement of the tenant to carry a service. Based on this, the cloud management platform needs to prompt the tenant with related information of the host and the instance for the tenant to select, or filter a plurality of host resources in the infrastructure based on filtering conditions such as a scenario requirement and a service type that are entered by the tenant, to meet a requirement of the tenant. However, the current technology cannot implement resource query, sellout prompting, and the like in a specified scenario requirement of the tenant, especially resource reservation in a differentiated scenario.

To resolve the foregoing problem, this application provides a cloud resource capacity management method and a cloud management platform. The method is applied to the cloud management platform. The cloud management platform is configured to manage an infrastructure. A host identification system is established to identify a corresponding attribute of each host in the infrastructure, so as to identify or determine a scenario requirement included in scenario information entered by a tenant, and determine, with reference to entered availability zone information, a host that has an identification attribute consistent with that of the scenario requirement in the infrastructure. Based on this, resource query, sellout prompting, resource reservation, and the like in a specified scenario and a multi-dimensional combination scenario are implemented.

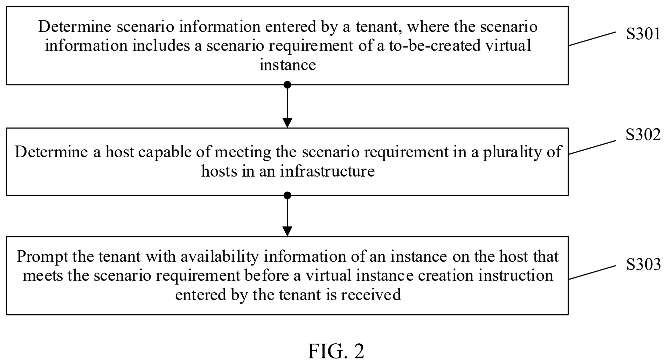

Based on the basic scenario shown in FIG. 1, the following describes in detail, with reference to FIG. 2, the cloud resource capacity management method provided in embodiments of the present invention.

Refer to FIG. 2. FIG. 2 is a simple schematic flowchart of the cloud resource capacity management method according to an embodiment of the present invention. Details are as follows:
Step S301: Determine scenario information entered by a tenant, where the scenario information includes a scenario requirement of a to-be-created virtual instance.

To configure a cloud service, the tenant needs to log in to a cloud management platform through a client, and enter or select, in an application programming interface (Application Programming Interface, API) or a configuration page provided by the cloud management platform, a virtual instance specification provided by the cloud management platform, to create, based on a virtual instance creation instruction of the tenant, the virtual instance to carry an actual service. In this process, for example, the cloud management platform may provide the tenant with options of scenario requirements for the tenant to select, to determine the scenario requirement of the to-be-created virtual instance of the tenant, and provide, based on the scenario requirement, the tenant with a resource that meets an actual service requirement of the tenant.

The scenario requirement in this embodiment of the present invention includes but is not limited to one or any combination of a fault domain, a deployment set, a health status of a host, a model of the host, a network type, a storage type, a private resource pool, and an instance quantity.

The virtual instance in this embodiment of the present invention includes any one of a virtual machine, a container, a database, a bare metal server, an object storage bucket, an ELB elastic load balancer, a cloud gateway, and a cloud cache.

It should be noted that, as mentioned in the present invention, the tenant enters the scenario information in the configuration page or the application programming interface API provided by the cloud management platform, and the cloud management platform determines, based on the scenario information, the scenario requirement that is of the to-be-created virtual instance and that is included in the scenario information. The entering mentioned herein may be direct entering performed by the tenant in an input box provided by the cloud management platform, or may be selection performed by the tenant based on different options provided by the cloud management platform. A manner in which the cloud management platform determines the scenario information that is entered by the tenant and that includes the to-be-created virtual instance is not limited in embodiments of the present invention.

Step S302: Determine a host capable of meeting the scenario requirement in a plurality of hosts in an infrastructure.

The cloud management platform determines, based on the scenario information entered by the tenant, the scenario requirement that is of the to-be-created virtual instance and that is included in the scenario information, and determines, based on the scenario requirement, a host capable of meeting the scenario requirement in an infrastructure 1 managed by the cloud management platform.

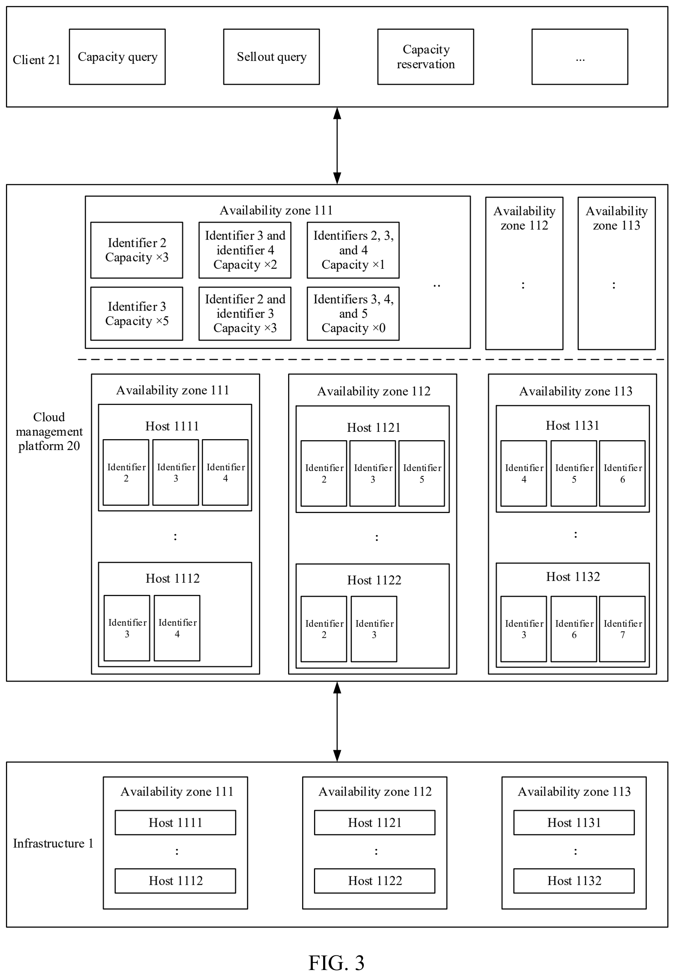

Specifically, an embodiment of the present invention discloses a host identification system. The following provides description with reference to FIG. 3. FIG. 3 is a diagram of an identification system for the cloud resource capacity management method according to an embodiment of the present invention.

For example, a cloud management platform 20 manages the infrastructure 1, and interacts with a client 21. A tenant A logs in to the cloud management platform 20 through the client 21, and enters the scenario information including the scenario requirement of the to-be-created virtual instance. To determine that there is a host capable of meeting the scenario requirement in the infrastructure 1, identification attributes of a plurality of hosts in each availability zone in the infrastructure 1 need to be identified and matched. Specifically, the cloud management platform 20 establishes a unified identifier mapping relationship based on attribute information of each host in the infrastructure 1, so that the attribute information of each host can correspond to a mapped identifier. In addition, it is determined that the mapped identifier corresponds to the scenario requirement entered by the tenant. The scenario requirement may include one or any combination of a fault domain, a deployment set, a health status of the host, a model of the host, a network type, and a storage type.

For example, Table 1 is a table of meanings of mapped identifiers. As shown in Table 1, an identifier 1, an identifier 2, and an identifier 3 correspond to fault domain attribute information of the host, and correspond to a fault domain requirement in the scenario requirement. The identifier 1 indicates a fault domain 1, the identifier 2 indicates a fault domain 2, and the identifier 3 indicates a fault domain 3. An identifier 4, an identifier 5, and an identifier 6 correspond to model attribute information of the host, and correspond to the model of the host in the scenario requirement. The identifier 4 indicates a model 1, the identifier 5 indicates a model 2, and the identifier 6 indicates a model 3. An identifier 7 and an identifier 8 correspond to the health status of the host, and correspond to the health status in the scenario requirement. The identifier 7 indicates a healthy state, and the identifier 8 indicates an unhealthy state. Optionally, an identifier n may further correspond to an attribute of another meaning like the network type, the storage type, the private resource pool, or a physical latency of the host. This is not limited in embodiments of the present invention. In addition, attributes that can be identified by using identifiers, such as a region and the availability zone, may be also provided, in a form of a scenario requirement through an identifier mapping system, for the tenant to filter the host.

**Table 1 Table of meanings of mapped identifiers**

| **Identifier** | **Meaning** |
|---|---|
| Identifier 1 | Fault domain 1 |
| Identifier 2 | Fault domain 2 |
| Identifier 3 | Fault domain 3 |
| Identifier 4 | Model 1 |
| Identifier 5 | Model 2 |
| Identifier 6 | Model 3 |
| Identifier 7 | Healthy |
| Identifier 8 | Sub-healthy |
| Identifier n | ... |

Based on the correspondence table of the meanings of the mapped identifiers in Table 1, the identifier mapping relationship of the hosts shown in FIG. 3 may be obtained. For example, in an availability zone 111, a host 1111 corresponds to the identifier 2, the identifier 3, and the identifier 4, and a host 1112 corresponds to the identifier 3 and the identifier 4. In an availability zone 112, a host 1121 corresponds to the identifier 2, the identifier 3, and the identifier 5, and a host 1122 corresponds to the identifier 2 and the identifier 3. In an availability zone 113, a host 1131 corresponds to the identifier 4, the identifier 5, and the identifier 6, and a host 1132 corresponds to the identifier 3, the identifier 6, and the identifier 7. In this embodiment, the cloud management platform may determine availability zone information entered by the tenant, to determine a host that meets the availability zone information. Alternatively, based on the identifier mapping relationship, the scenario requirement in the scenario information entered by the tenant may be determined, to determine an identifier corresponding to the scenario requirement and attribute information corresponding to the identifier, and determine, in the infrastructure, a host that matches the attribute information, so as to determine the host that meets the scenario requirement.

For example, the tenant A enters availability zone information of the availability zone 111, and further enters a scenario requirement of the fault domain 2. The cloud management platform 20 may determine, based on the availability zone 111 and the fault domain 2, the host 1111 that meets the requirement.

On this basis, with reference to capacity information of each host, a host identifier capacity resource table shown in Table 2 may be formed, and capacity information of a virtual instance of each specification on the host is accordingly determined. For example, in the table, mapped identifiers corresponding to the host 1111 may be identified as the identifier 2 and the identifier 3, and capacity information of a virtual instance of each specification on the host 1111 may be further identified. A mapped identifier corresponding to the host 1112 is the identifier 3, and a capacity of a virtual instance of a specification carried on the host is 1. Mapped identifiers corresponding to the host 1131 are the identifier 2 and the identifier 3, a capacity of a virtual instance of a specification carried on the host is 2, and a capacity of a virtual instance of another specification is 3.

**Table 2 Host identifier capacity resource table**

| **Host** | **Identifier 1** | **Identifier 2** | **Identifier 3** | **Identifier n** | **Capacity** |
|---|---|---|---|---|---|
| Host 1111 | No | Yes | Yes | ... | Capacity of each specification |
| Host 1112 | No | No | Yes | ... | Capacity of each specification |
| Host 1121 | No | Yes | Yes | ... | Capacity of each specification |
| ... | ... | ... | ... | ... | ... |

Further, when the tenant enters a plurality of scenario requirements as a combination, the cloud management platform needs to determine a host capable of meeting the combination of the plurality of scenario requirements in the infrastructure. In view of this, an embodiment of the present invention further discloses an identifier combination-based capacity resource table. As shown in Table 3, for example, the ID 1 indicates a no-identifier combination, with a meaning of all hosts in the infrastructure, and the capacity information includes capacities of virtual instances of various specifications on all the hosts in the infrastructure. The ID 2 indicates the identifier 1, and a corresponding meaning is a host in the fault domain 1. Accordingly, a host having an attribute of the fault domain 1 in the infrastructure is determined, and capacity information of virtual instances of various specifications on the host is determined. The ID 6 indicates a combination of the identifier 1 and the identifier 4, and a corresponding meaning is a host whose model is the model 1 in the fault domain 1. In other words, a host in the infrastructure needs to meet the two attributes: the fault domain 1 and the model being the model 1. In addition, capacity information of virtual instances of various specifications on the host that meets the identifier combination is determined.

It should be noted that the capacity information may be expressed in various forms, and may be represented separately by a quantity of virtual instances of various specifications on the host that meets the identifier combination, or may be represented by a sum of quantities of virtual instances of a same specification on hosts. This is not limited in embodiments of the present invention.

**Table 3 Identifier combination-based capacity resource table**

| **ID** | **Identifier combination** | **Meaning of the identifier combination** | **Capacity** |
|---|---|---|---|
| 1 | No identifier | All hosts | Capacities of all the hosts |
| 2 | Identifier 1 | Host in a fault domain 1 | Capacity of a specification of a single-identifier host |
| 3 | Identifier 2 | Host in a fault domain 2 | Capacity of a specification of a single-identifier host |
| 4 | Identifier 3 | Host in a fault domain 3 | Capacity of a specification of a single-identifier host |
| 5 | Identifier 4 | Host of a model 1 | Capacity of a specification of a single-identifier host |
| 6 | Identifier 1 + Identifier 4 | Host of the model 1 in the fault domain 1 | Capacity of a specification of a multi-identifier host |
| 7 | Identifier 1 + Identifier 5 | Host of a model 2 in the fault domain 1 | Capacity of a specification of a multi-identifier host |
| ... | ... | | ... |

Based on the foregoing host identifier mapping solution, the cloud management platform may determine, based on the scenario information entered by the tenant, the scenario requirement included in the scenario information, and determine an identifier mapping relationship corresponding to the scenario requirement. The scenario requirement may be a single identifier or an identifier combination. The cloud management platform determines, based on the identifier corresponding to the scenario requirement, the host that matches the scenario requirement in the infrastructure. In this way, a host resource can be determined based on a specified scenario requirement or a multi-dimensional scenario requirement entered by the tenant.

Step S303: Prompt the tenant with availability information of an instance on the host before the virtual instance creation instruction entered by the tenant for the virtual instance is received.

Before the tenant enters the virtual instance creation instruction for the to-be-created virtual instance, the cloud management platform prompts the tenant with the host determined in step S302, and prompts the tenant with the availability information of the instance on the host. In this way, the tenant can fully understand, by using the availability information such as sellout information, a host evaluation, the capacity information, and a risk identifier, a resource that can currently meet a requirement of the tenant in the infrastructure, select a virtual instance based on an actual service, and then enter the virtual instance creation instruction.

Optionally, when the tenant performs an operation like capacity query, sellout query, capacity reservation, or capacity recommendation, the cloud management platform may further prompt the tenant with a host that meets a scenario requirement.

Specifically, still refer to FIG. 3. A resource sellout correspondence in an identifier combination may be further determined based on the identifier system that is for host identifier mapping and the identifier combination-based capacity resource relationship. As shown in Table 4, Table 4 is an identifier combination-based resource sellout table. Specifically, a corresponding identifier combination is determined based on a combination of scenario requirements entered by the tenant, and capacity information of virtual instances of various specifications on a host corresponding to the identifier combination is determined with reference to Table 3. When all virtual instances of some specifications have been sold out, a sellout occurs, and the virtual instance resources cannot be provided to the tenant anymore. For example, when the identifier combination indicates that there is no identifier, the capacity information of virtual instances of various specifications on the host corresponding to the identifier combination is capacity information of the ID 1 in Table 3. If a virtual instance resource of a specification corresponding to the identifier combination is sold out, the cloud management platform may determine, by using a sellout identifier, that the virtual instance resource of the specification is sold out.

**Table 4 Identifier combination-based resource sellout table**

| **Identifier combination** | **Capacity** | **Sellout information** |
|---|---|---|
| No identifier | Capacity of each specification of the ID 1 | A specification of the ID 1 is sold out |
| Specified fault domain identifier | Capacity of each specification of the ID 2 | A specification of the ID 2 is sold out |
| Model identifier | Capacity of each specification of the ID 5 | A specification of the ID 5 is sold out |
| Specified fault domain identifier + Model identifier | Capacity of each specification of the ID 6 | A specification of the ID 6 is sold out |
| ... | ... | ... |

Further, the cloud management platform determines, based on the scenario information entered by the tenant, the scenario requirement that is of the to-be-created virtual instance and that is included in the scenario information, and identifies an identifier combination corresponding to the scenario requirement, to determine a host capable of meeting the scenario requirement, query capacity information, determine sellout information, and the like. For example, the tenant enters scenario information of the model 1 in the fault domain 1, where the scenario information is a scenario in which a fault domain is specified to use a specified model, and a corresponding identifier combination is the identifier 2 and the identifier 4. In this case, a host that meets both the identifier 2 and the identifier 4 in the infrastructure is determined, capacity information of virtual instances of various specifications on the host that meets the scenario requirement is queried, and sellout information is determined.

**Table 5 Scenario information-based identifier combination table**

| **Scenario information** | **Identifier combination** |
|---|---|
| Normal created scenario | No identifier |
| Specified fault domain scenario | Specified fault domain identifier |
| Scenario in which a fault domain is specified to use a specified model | Specified fault domain identifier + Model identifier |
| ... | ... |

For example, with reference to FIG. 3, according to the foregoing disclosed host identifier mapping technical solution, the client 21 receives the scenario information entered by the tenant A. Optionally, the scenario information may be entered when the tenant A performs services such as capacity query, sellout query, and capacity reservation. The cloud management platform determines, based on the scenario information entered by the tenant A, the scenario requirement that is of the to-be-created virtual instance and that is included in the scenario information. For example, the scenario requirement is a combination of the identifier 2, the identifier 3, and the identifier 4. In this case, the cloud management platform 20 determines, based on the identifier mapping table, an identifier corresponding to each host in the infrastructure 1, and then determines, based on the corresponding identifier combination, the host that meets the scenario requirement.

Further, when the tenant A chooses to perform capacity query on the entered scenario requirement, the cloud management platform 20 may prompt, based on the foregoing determined hosts, the tenant with capacity information of virtual instances of various specifications on these hosts. The cloud management platform 20 may establish a correspondence between an identifier or an identifier combination and capacity information. As shown in the figure, capacities of virtual instances of various specifications corresponding to the identifier 2 are 3. For example, the scenario requirement is the combination of the identifier 2, the identifier 3, and the identifier 4. In this case, it is determined that the host that meets the identifier combination is the host 1111, and a quantity of hosts is 1. A capacity of a virtual instance that can be provided by the host 1111 that meets the identifier combination is 1, and the cloud management platform 20 prompts the tenant A with the capacity information.

Optionally, according to the foregoing disclosed host identifier mapping technical solution, the cloud management platform may further provide sellout query for the tenant. For example, the cloud management platform 20 determines that the scenario requirement entered by the tenant A is the combination of the identifier 3, the identifier 4, and the identifier 5. The cloud management platform 20 determines that a quantity of hosts that meet the identifier combination in the infrastructure 1 is 3, but a capacity corresponding to the identifier combination is 0, indicating that virtual instances of various specifications of the identifier combination are sold out. In this case, the cloud management platform 20 prompts the tenant A with the sellout information.

In an embodiment, a scenario requirement corresponds to an identifier combination. The identifier combination includes n identifiers, and n is an integer not less than 0. The cloud management platform queries m identifiers corresponding to each of a plurality of hosts, where m is a positive integer. When the n identifiers each have a same identifier in the m identifiers, a host corresponding to the m identifier features is considered to meet the scenario requirement.

In another embodiment of the present invention, the cloud management platform may first determine, for each host in the infrastructure based on the identifier mapping relationship, an identifier corresponding to the host, and further, may determine capacity information of virtual instances of various specifications on the host. When the scenario requirement entered by the tenant is determined, host resources in the infrastructure are refreshed based on the identifier mapping relationship of the scenario requirement, and a host that meets the scenario requirement and corresponding capacity information and sellout information are determined. In this way, the tenant can be prompted more quickly with availability information of an instance on the host that meets the scenario requirement. This improves efficiency of giving a feedback to the tenant.

Based on this, the cloud management platform may determine, based on the scenario information entered by the tenant, the host that meets the scenario requirement in the infrastructure, and prompt the tenant with the availability information of the instance on the host, to refresh and prompt, based on a requirement of the tenant like a multi-scenario combination or a specified scenario dimension, a resource that meets the requirement, to improve transparency and timeliness of the resource.

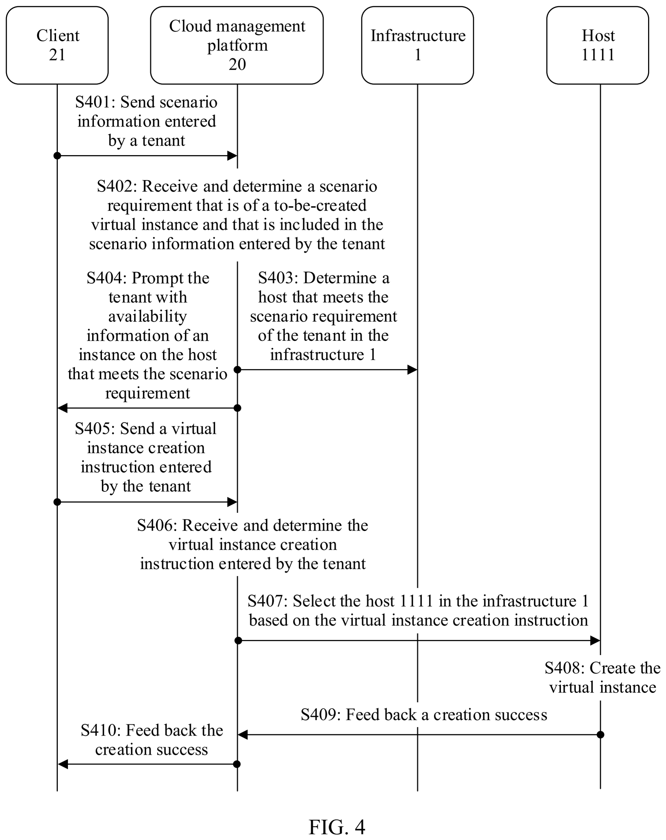

Further refer to FIG. 4. FIG. 4 is a flowchart of a cloud resource capacity management method according to an embodiment of the present invention. As shown in FIG. 4, for ease of understanding, the procedure is described with reference to FIG. 1. The method includes but is not limited to the following steps.

Step S401: The client 21 sends scenario information entered by the tenant A.

The tenant A logs in to the cloud management platform 20 through the client 21, and enters the scenario information, and the client 21 sends the scenario information to the cloud management platform 20.

Optionally, in this step, the tenant A may further enter availability zone information through the client 21, and the client 21 sends the availability zoneinformation to the cloud management platform 20. The availability zone information may be used to determine that a host that is in the infrastructure 1 and that meets the availability zone information provides a virtual instance. When the tenant A has an availability zone requirement for a to-be-created virtual instance, the tenant A may determine a suitable host by entering the availability zone information.

It should be noted that an interface may be separately provided by the cloud management platform for the availability zone information in this embodiment of the present invention. For example, an interface used for a reserved instance request is different from those used for the scenario information and the availability zone information. Alternatively, a same interface may be used for the reserved instance request and the scenario information. In others words, an availability zone may be one piece of scenario information, and an availability zone selected by the tenant based on the availability zone information may be one of the scenario requirements, for example, an availability zone A, an availability zone B, an availability zone C, and random allocation. This is not limited in embodiments of the present invention.

Step S402: The cloud management platform 20 receives and determines a scenario requirement that is of the to-be-created virtual instance and that is included in the scenario information entered by the tenant A.

The cloud management platform 20 receives the scenario information that is entered by the tenant A and that is sent by the client 21, and determines the scenario requirement that is included in the scenario information and that is one or any combination of a fault domain, a deployment set, a health status of a host, a model of the host, a network type, and a storage type. The scenario requirement is the scenario requirement of the to-be-created virtual instance, and the to-be-created virtual instance may be a virtual instance to be created by the tenant A in the infrastructure 1, or may be a to-be-queried virtual instance selected by the tenant A. Optionally, the cloud management platform 20 may further receive and determine the availability zone information entered by the tenant A.

Step S403: The cloud management platform 20 determines a host that meets the scenario requirement of the tenant A in the infrastructure 1.

With reference to the technical solution disclosed in FIG. 3, the cloud management platform 20 determines, based on the foregoing identification system, the host that is in the infrastructure 1 and that meets the scenario requirement entered by the tenant A.

Optionally, the cloud management platform 20 may further determine, based on the availability zone information entered by the tenant A, a host that is in a plurality of hosts disposed in an availability zone in the infrastructure and that is capable of meeting the scenario requirement.

It should be noted that the availability zone information entered by the tenant A may be of an availability zone, or may be of a plurality of availability zones or a random availability zone. The cloud management platform 20 may determine, by using the identification system disclosed in FIG. 3, a host that meets the availability zone information, and a host that meets the scenario requirement entered by the tenant A in the availability zone information may be determined simultaneously. Alternatively, a host that meets the availability zone information may be first determined. Then, a host that meets the scenario requirement is determined.

Step S404: The cloud management platform 20 prompts the tenant A with availability information of an instance on the host that meets the scenario requirement.

After determining the host that meets the scenario requirement entered by the tenant A, and before receiving a virtual instance creation instruction entered by the tenant A for a virtual instance, the cloud management platform 20 prompts the tenant A with the host, to feed back the host that meets the scenario requirement entered by the tenant A.

Optionally, before receiving the virtual instance creation instruction entered by the tenant for the virtual instance, the cloud management platform prompts the tenant with an evaluation of the host that meets the scenario requirement. An evaluation may be performed based on one or any combination of a hardware status, a resource assurance capability, a scenario requirement matching degree, or the like corresponding to each host. A representation form of the evaluation on each host may alternatively be a score obtained by performing calculation based on weights of elements such as the hardware status, the resource assurance capability, and the scenario requirement matching degree corresponding to each host. A higher score indicates a better evaluation on the host. The representation form includes but is not limited to the score, and may alternatively be a star, a level, or the like. When the tenant is prompted, the tenant may be prompted with the evaluation of each host in descending order, ascending order, or a random evaluation order. Based on this, the cloud management platform may further recommend a host with a higher evaluation to the tenant based on the evaluation of each host, sort the host with the higher evaluation in a forward order, and prompt the tenant with the host with the higher evaluation by using a specific highlighting mark, to improve efficiency of identifying the host with the higher evaluation.

In addition, the availability information that is prompted by the cloud management platform to the tenant and that is of the instance on the host that meets the scenario requirement may further include a risk identifier. The risk identifier may be used to determine resource assurance based on information such as resource popularity and a remaining capacity. A higher risk level indicates lower assurance and a higher risk of the instance. Alternatively, a same representation form as the host evaluation may be used to determine, through calculation based on a weight, a score or a rating of each element of the risk identifier, so as to improve validity of information prompted to the tenant.

For example, when the host that meets the scenario requirement is available, the host, namely, a specification capacity, may be prompted to the tenant A in a form of virtual instances of various specifications provided by the host. When the host that meets the scenario requirement is unavailable, the tenant A is prompted with a sellout of the instance on the host capable of meeting the scenario requirement. The sellout prompt may be represented in a form of a sellout of virtual instances of various specifications carried on the host. In general, the prompt may be performed by using capacity information of a virtual instance running on each host that meets the scenario requirement, or the prompt may be performed to the tenant by using a combination of the capacity information and the sellout information.

For example, after determining the host that meets the scenario requirement entered by the tenant A, and before receiving a virtual instance creation instruction entered by the tenant A for a virtual instance, the cloud management platform 20 may alternatively prompt the tenant with the evaluation of the host that meets the scenario requirement. The evaluation is performed by the cloud management platform 20 based on one or any combination of the hardware status, the resource assurance capability, the scenario requirement matching degree, and the like that correspond to the host. Based on the evaluation, a host that has a higher host evaluation and that better matches a service of the tenant A may be recommended to the tenant A. A recommendation form may be a manner like a top ranking or a key prompt.

Step S405: The client 21 sends the virtual instance creation instruction entered by the tenant A.

Specifically, the tenant A enters the virtual instance creation instruction through the client 21, the virtual instance creation instruction is sent by the client 21 to the cloud management platform 20, and the virtual instance creation instruction is entered by the tenant A when the tenant A determines that the host that meets the scenario requirement entered by the tenant A is available.

Step S406: The cloud management platform 20 receives and determines the virtual instance creation instruction entered by the tenant A.

The cloud management platform 20 receives and determines the virtual instance creation instruction that is sent by the client 21 and that is entered by the tenant A. It should be noted that in this embodiment of the present invention, there may be one or more to-be-created virtual instances. This is not limited in embodiments of the present invention.

Step S407: The cloud management platform 20 selects a target host in the infrastructure based on the virtual instance creation instruction.

For example, the cloud management platform 20 selects, from the infrastructure 1 based on the received virtual instance creation instruction entered by the tenant A, the host 1111 that meets the scenario requirement. Optionally, the cloud management platform 20 may alternatively select, from the infrastructure 1 based on the received virtual instance creation instruction entered by the tenant A, one or more hosts that meet the scenario requirement.

Step S408: Create the virtual instance on the host 1111.

The cloud management platform 20 configures, based on the virtual instance creation instruction, the host 1111 to create the virtual instance on the host.

Step S409: The host 1111 feeds back a creation success.

The host 1111 feeds back, to the cloud management platform 20, that the virtual instance is successfully created.

Step S410: The cloud management platform 20 feeds back the creation success.

The cloud management platform 20 feeds back, to the client 21, that the virtual instance is successfully created.

In another embodiment of the present invention, the cloud management platform may further provide a page or an interface to receive a reserved instance request entered by the tenant. Before the reserved instance request is entered, the tenant has reserved some resources in the infrastructure through the cloud management platform. These resources are provided by a host in the infrastructure, and are managed in a form of a resource reservation pool, a private resource pool, a dedicated host pool, or the like of the tenant. Based on this, when the tenant needs to create a virtual instance by using a reserved resource, the tenant may enter a reserved instance request including a resource pool requirement of the to-be-created virtual instance, and the cloud management platform may determine the resource pool requirement of the to-be-created virtual instance included in the reserved instance request, for example, a private resource pool. The cloud management platform may determine, based on the resource pool requirement, a host capable of meeting the resource pool requirement in hosts of the infrastructure. Therefore, when the tenant enters both the scenario information and the reserved instance request, the cloud management platform may determine the scenario requirement and the resource pool requirement, determine a host capable of meeting the scenario requirement and the resource pool requirement in the plurality of hosts of the infrastructure, and feed back, to the tenant, availability information of an instance on the host that meets the scenario requirement in the infrastructure.

Further, according to the foregoing steps S405 to S410, the virtual instance creation instruction entered by the tenant for the to-be-created virtual instance may be received, and target hosts that meet the scenario requirement are selected in the infrastructure. These target hosts further meet the resource pool requirement on the basis of meeting the scenario requirement. Based on this, the cloud management platform creates the virtual instance on the target host according to the instruction, and feeds back a virtual instance creation status to the tenant.

It should be noted that an interface may be separately provided by the cloud management platform for the reserved instance request in this embodiment of the present invention. For example, the interface used for the reserved instance request is different from those used for the scenario information and the availability zone information. Alternatively, a same interface may be used for the reserved instance request and the scenario information. In other words, the reserved instance request may be one piece of scenario information, and the resource pool requirement included in the reserved instance request may be one of the scenario requirements, for example, the private resource pool. This is not limited in embodiments of the present invention.

Based on this, in a case of virtual instance creation, the cloud management platform may determine, based on scenario information entered by the tenant, a host that meets a scenario requirement in the infrastructure, and prompt the tenant with availability information of an instance on the host, so that the tenant can further learn of a resource status. Therefore, a virtual instance creation instruction may be entered based on a current resource status, and the cloud management platform creates a virtual instance. In this way, timeliness of control of the tenant on the availability information in this case is greatly improved.

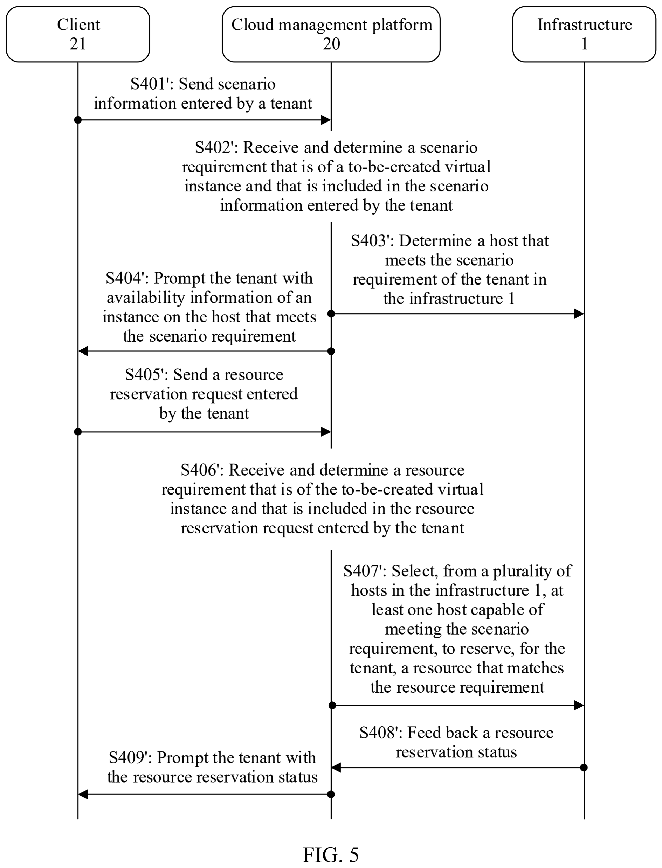

In another embodiment of the present invention, further refer to FIG. 5. FIG. 5 is another schematic flowchart of the cloud resource capacity management method according to an embodiment of the present invention. Specific steps are as follows:
Steps S401' to S404' are the same as the foregoing steps S401 to S404, and details are not described again in this embodiment of the present invention.
Step S405': The client 21 sends a resource reservation request entered by the tenant A.

The tenant A enters the resource reservation request through the client 21, where the resource reservation request includes a resource requirement of the to-be-created virtual instance, the resource requirement is required by a virtual instance that may be created by the tenant in the future, and a resource that needs to be reserved in the infrastructure may be determined based on the resource requirement.

It should be noted that, in this embodiment of the present invention, the resource requirement of the to-be-created virtual instance that is entered by the tenant or the entering mentioned in the scenario requirement of the to-be-created virtual instance that is entered by the tenant may be direct entering performed by the tenant on an input page provided by the cloud management platform, or may be selection performed by the tenant based on different options provided by the cloud management platform.

Step S406': The cloud management platform 20 receives and determines the resource requirement of the to-be-created virtual instance.

The cloud management platform 20 receives and determines the resource reservation request that is sent by the client 21 and that is entered by the tenant, where the resource reservation request includes the resource requirement of the to-be-created virtual instance.

Step S407': The cloud management platform 20 selects, from a plurality of hosts in the infrastructure 1, at least one host capable of meeting the scenario requirement, to reserve, for the tenant A, a resource that matches the resource requirement.

The cloud management platform 20 selects, based on the resource requirement entered by the tenant, the at least one host capable of meeting the scenario requirement from the plurality of hosts in the infrastructure 1, to reserve, for the tenant A, the resource that matches the resource requirement. The resource selected by the cloud management platform 20 for reservation may be on a same host, or may be on different hosts.

Optionally, the cloud management platform 20 first determines, according to the foregoing steps, the host that meets the scenario requirement entered by the tenant, and then reserves the matched resource in the infrastructure based on the resource requirement entered by the tenant. In this way, resource reservation for a specified scenario requirement or a multi-dimensional scenario requirement entered by the tenant is implemented, to ensure resource supply.

Step S408': The infrastructure 1 feeds back a resource reservation status.

The infrastructure 1 feeds back the resource reservation status to the cloud management platform 20.

Step S409': The cloud management platform 20 prompts the tenant A with the resource reservation status.

The cloud management platform 20 prompts the tenant A with the resource reservation status, to feed back the resource reservation status to the tenant A in a timely manner.

According to the foregoing method steps, based on the specified scenario requirement, the multi-dimensional combination scenario requirement, or the like that is entered by the tenant, the cloud management platform may identify a host that meets the scenario requirement in the infrastructure and determine the corresponding host, and prompt the tenant with availability information of an instance on the host that meets the scenario requirement, so that the tenant can accurately learn of a current resource status in a timely manner in a resource reservation scenario, to improve resource transparency.

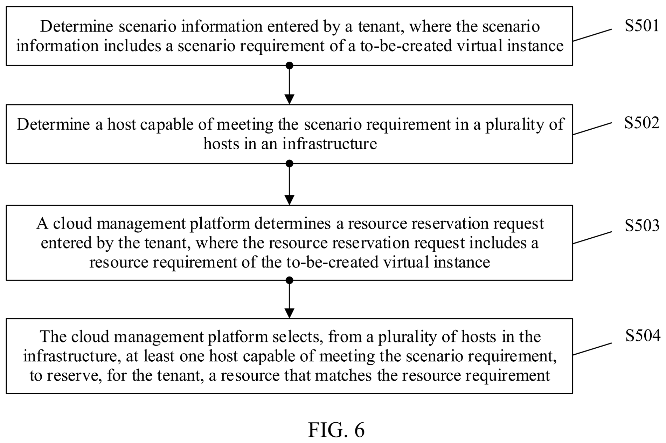

In another embodiment of the present invention, further refer to FIG. 6. FIG. 6 is another simple flowchart of the cloud resource capacity management method according to an embodiment of the present invention. Specific steps are as follows:
Step S501: Determine scenario information entered by a tenant, where the scenario information includes a scenario requirement of a to-be-created virtual instance.

To configure a cloud service, the tenant needs to log in to a cloud management platform through a client, and enter or select, in an application programming interface (API) or a configuration page provided by the cloud management platform, a virtual instance specification provided by the cloud management platform, to create, based on a virtual instance creation instruction of the tenant, the virtual instance to carry an actual service. In this process, for example, the cloud management platform may provide the tenant with options of scenario requirements for the tenant to select, to determine the scenario requirement of the to-be-created virtual instance of the tenant, and provide, based on the scenario requirement, the tenant with a resource that meets an actual service requirement of the tenant.

Step S502: Determine a host capable of meeting the scenario requirement in a plurality of hosts in an infrastructure.

The cloud management platform determines, based on the scenario information entered by the tenant, the scenario requirement that is of the to-be-created virtual instance and that is included in the scenario information, and determines, based on the scenario requirement through an identification system, a host capable of meeting the scenario requirement in an infrastructure 1 managed by the cloud management platform.

Step S503: Determine a resource reservation request entered by the tenant, where the resource reservation request includes a resource requirement of the to-be-created virtual instance.

The cloud management platform determines, based on the resource reservation request entered by the tenant, the resource requirement that is of the to-be-created virtual instance and that is included in the resource reservation request. The resource requirement is required by a virtual instance that may be created by the tenant in the future, and a resource that needs to be reserved in the infrastructure may be determined based on the resource requirement.

Step S504: Select, from a plurality of hosts in the infrastructure, at least one host capable of meeting the scenario requirement, to reserve, for the tenant, a resource that matches the resource requirement.

The cloud management platform selects, from the plurality of hosts in the infrastructure, the at least one host capable of meeting the scenario requirement, to reserve, for the tenant, the resource that matches the resource requirement entered by the tenant. In this way, resource reservation for the specified scenario requirement or the multi-dimensional scenario requirement is implemented, so that the tenant can implement resource assurance according to the method, and a technical problem that a resource reservation request of a plan type cannot be ensured is resolved.

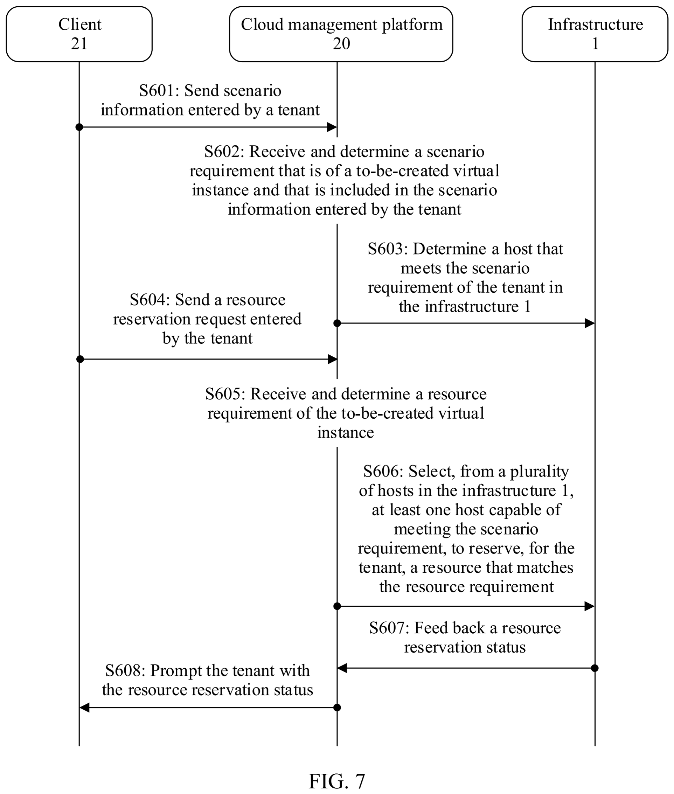

To further clearly describe embodiments of the present invention, with reference to FIG. 1, refer to FIG. 7. FIG. 7 is another schematic flowchart of a cloud resource capacity management method according to an embodiment of the present invention. Details are as follows:
Step S601: The client 21 sends scenario information entered by the tenant A.

The tenant A logs in to the cloud management platform 20 through the client 21, and enters the scenario information, and the client 21 sends the scenario information to the cloud management platform 20.

Optionally, in this step, the tenant A may further enter availability zone information through the client 21, and the client 21 sends the scenario information to the cloud management platform 20. The availability zone information may be used to determine that a host that is in the infrastructure 1 and that meets the availability zone information provides a virtual instance. When the tenant A has an availability zone requirement for a to-be-created virtual instance, the tenant A may determine a suitable host by entering the availability zone information.

Step S602: The cloud management platform 20 receives and determines a scenario requirement that is of the to-be-created virtual instance and that is included in the scenario information entered by the tenant A.

The cloud management platform 20 receives the scenario information that is entered by the tenant A and that is sent by the client 21, and determines the scenario requirement included in the scenario information. The scenario requirement is the scenario requirement of the to-be-created virtual instance, and the to-be-created virtual instance may be a virtual instance to be created by the tenant A in the infrastructure 1, or may be a to-be-queried virtual instance selected by the tenant A. Optionally, the cloud management platform 20 may further receive and determine the availability zone information entered by the tenant A.

Step S603: The cloud management platform 20 determines a host that meets the scenario requirement of the tenant A in the infrastructure 1.

With reference to the technical solution disclosed in FIG. 3, the cloud management platform 20 determines, based on the foregoing identification system, the host that is in the infrastructure 1 and that meets the scenario requirement entered by the tenant A.

Optionally, the cloud management platform 20 may further determine, based on the availability zone information entered by the tenant A, a host that is in a plurality of hosts disposed in an availability zone in the infrastructure and that is capable of meeting the scenario requirement.

It should be noted that the availability zone information entered by the tenant A may be of an availability zone, or may be of a plurality of availability zones or a random availability zone. The cloud management platform 20 may determine, by using the identification system disclosed in FIG. 3, a host that meets the availability zone information, and a host that meets the scenario requirement entered by the tenant A in the availability zone information may be determined simultaneously. Alternatively, a host that meets the availability zone information may be first determined. Then, a host that meets the scenario requirement is determined.

Step S604: The client 21 sends a resource reservation request entered by the tenant A.

The client 21 sends the resource reservation request to the cloud management platform 20 based on the resource reservation request entered by the tenant A.

Step S605: The cloud management platform 20 receives and determines a resource requirement of the to-be-created virtual instance.

The cloud management platform 20 receives and determines the resource reservation request that is sent by the client 21 and that is entered by the tenant A, where the resource reservation request includes the resource requirement of the to-be-created virtual instance.

Step S606: The cloud management platform 20 selects, from a plurality of hosts in the infrastructure 1, at least one host capable of meeting a scenario requirement, to reserve, for the tenant A, a resource that matches the resource requirement.

The cloud management platform 20 selects, based on the resource requirement entered by the tenant, the at least one host capable of meeting the scenario requirement from the plurality of hosts in the infrastructure 1, to reserve, for the tenant A, the resource that matches the resource requirement. The resource selected by the cloud management platform 20 for reservation may be on a same host, or may be on different hosts.

Optionally, the cloud management platform 20 first determines, according to the foregoing steps, the host that meets the scenario requirement entered by the tenant, and then reserves the matched resource in the infrastructure based on the resource requirement entered by the tenant. In this way, resource reservation for a specified scenario requirement or a multi-dimensional scenario requirement entered by the tenant is implemented, to ensure resource supply.

Step S607: The infrastructure 1 feeds back a resource reservation status.

The infrastructure 1 feeds back the resource reservation status to the cloud management platform 20.

Step S608: The cloud management platform 20 prompts the tenant A with the resource reservation status.

The cloud management platform 20 prompts the tenant A with the resource reservation status.

The scenario requirement in this embodiment of the present invention includes but is not limited to one or any combination of a fault domain, a deployment set, a health status of a host, a model of the host, a network type, and a storage type.

The virtual instance in this embodiment of the present invention includes any one of a virtual machine, a container, a database, a bare metal server, an object storage bucket, an ELB elastic load balancer, a cloud gateway, and a cloud cache.

According to the foregoing method steps, the cloud management platform may determine, based on the specified scenario requirement, the multi-dimensional combined scenario requirement, or the like that is entered by the tenant, the host capable of meeting the requirement in the infrastructure, and then reserve, based on the resource reservation request entered by the tenant, the resource that is in the infrastructure and that matches the resource requirement included in the resource reservation request. The tenant may enter the scenario information and the resource reservation request on the cloud management platform at the same time, or may separately enter the scenario information and the resource reservation request. According to the foregoing method steps, the resource reservation request of the tenant can be implemented, to ensure resource supply.

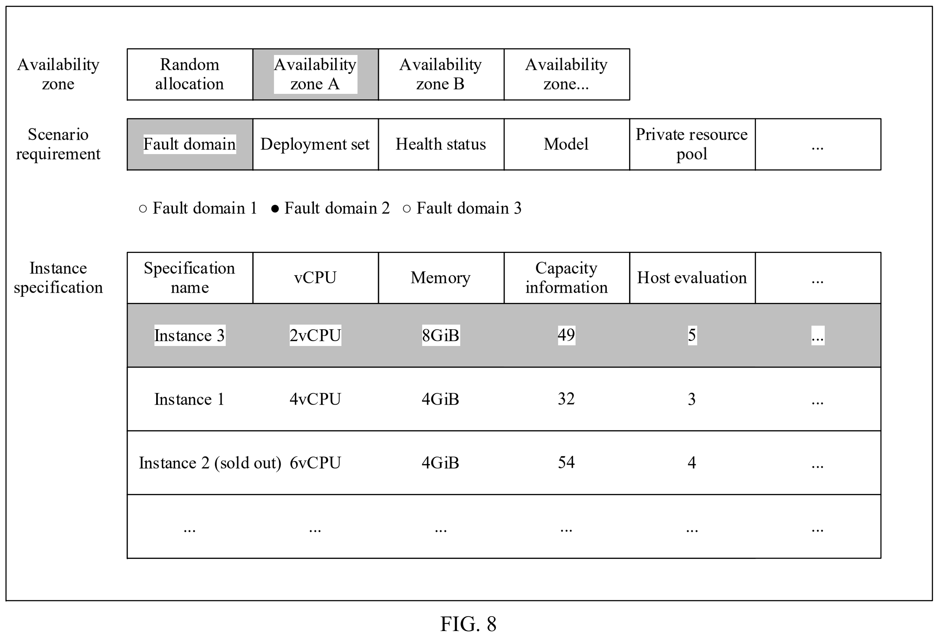

Further refer to FIG. 8. FIG. 8 is a diagram of a capacity page of the cloud resource capacity management method according to an embodiment of the present invention. Details are as follows:
The page includes information such as an availability zone, scenario information, and an instance specification. For example, the availability zone includes options such as random allocation, an availability zone A, an availability zone B, an availability zone, and the like for selection by a tenant. In addition to the option manner shown in this embodiment of the present invention, an input box may be provided, and the tenant enters availability zone information in the input box. A cloud management platform may use an AI algorithm or the like. The scenario information includes a scenario requirement of a to-be-created virtual instance. On the page, the scenario information includes scenario requirements such as a fault domain, a deployment set, a health status, and a model. The tenant may select one or more scenario requirements by using the options, or may enter scenario information including the scenario requirement of the to-be-created virtual instance through the input box. There may be one or more entered scenario requirements, and the cloud management platform identifies the scenario requirements. The cloud management platform determines, based on the availability zone information entered by the tenant and the scenario information including the scenario requirement of the to-be-created virtual instance, a host that is capable of meeting the scenario requirement and that is disposed in an availability zone entered by the tenant in the infrastructure. For example, a specification column of the instance specification includes a specification name, a vCPU, a memory, a processor, a host evaluation, and the like, and a specification corresponding to each instance. The host evaluation is to evaluate, in a form of a score, a hardware status, a resource assurance capability, and a scenario requirement matching degree of a host on which an instance is located. Alternatively, evaluation may be performed in another form like a star. On the page, a host is prompted the tenant by using capacity information of an instance specification, and capacity information of a virtual instance is prompted when availability information of the instance on the host is prompted.

For example, the tenant may enter a specification change request, a resource reservation request, or the like before or after entering the availability zone information and the scenario information. The specification change request indicates the cloud management platform to change an existing virtual instance to an instance specification specified in the specification change request, and the resource reservation request indicates the cloud management platform to reserve a resource based on a resource requirement of a to-be-created virtual instance that is included in the resource reservation request. The availability zone information entered by the tenant is the availability zone A, and the scenario requirement included in the entered scenario information is a fault domain 2. The cloud management platform determines that an instance 1, an instance 2, and an instance 3 disposed on a host in the availability zone A can meet the fault domain 2, where the instance 2 is sold out. A sellout prompt manner in this embodiment is merely an example. Based on a host evaluation of a host on which each virtual instance is located, a higher evaluation score, for example, a host evaluation 5 of the instance 3, which is higher than a host evaluation 4 of the instance 1 and a host evaluation 3 of the (sold-out) instance 2, has a higher ranking. When the tenant enters or selects the instance 3, capacity information of the instance specification may be prompted to the user. Alternatively, the tenant may enter the availability zone information as the availability zone A and the availability zone B, and the scenario requirements included in the entered scenario information are the fault domain 2 and a model A1. The cloud management platform determines a host that is disposed in the availability zone A and capable of meeting the fault domain 2 and whose host model is A1, and prompts the tenant with the host. For example, the tenant enters a virtual instance creation instruction, and the cloud management platform selects a target host from a plurality of hosts in which a selected instance specification in the virtual instance creation instruction is located, and creates a virtual instance on the target host. For another example, the tenant enters a resource reservation request, and the cloud management platform selects, in an infrastructure based on a resource requirement of the to-be-created virtual instance that is included in the resource reservation request, at least one host that can provide a resource to reserve the resource.

Optionally, the tenant may not enter the availability zone information, and the availability zone information is randomly allocated. Alternatively, the scenario information may not be entered. In this case, the scenario requirement in the scenario information is all unmarked hosts in the infrastructure, and the cloud management platform prompts the tenant with a host capable of meeting the requirement in the infrastructure.

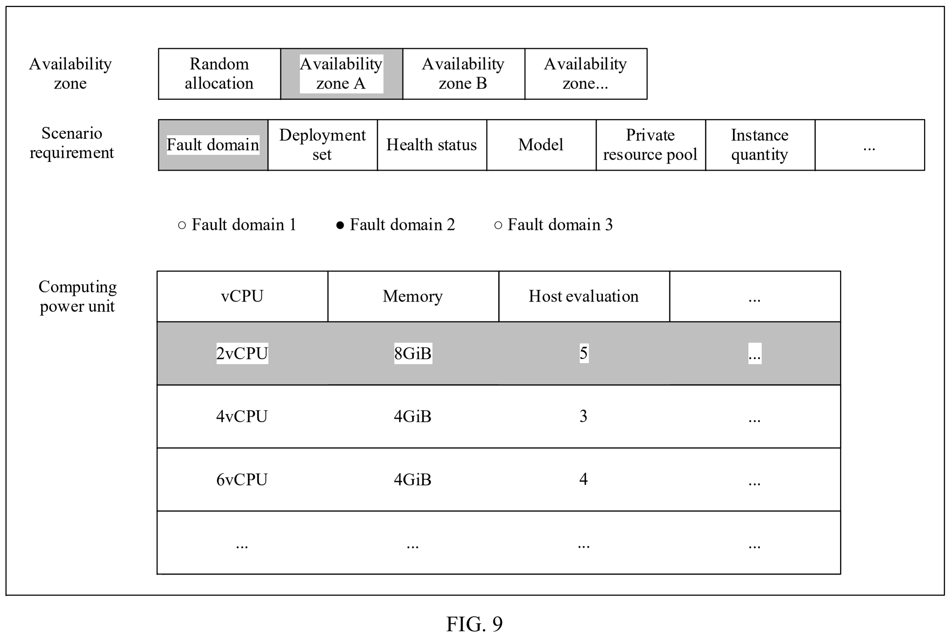

In another embodiment of the present invention, refer to FIG. 9. FIG. 9 is a diagram of another capacity page of the cloud resource capacity management method according to an embodiment of the present invention. Details are as follows:
The diagram of the capacity page in this embodiment is different from that in FIG. 8. Availability information of an instance on a host that meets a scenario requirement is not presented to a tenant in a form of an instance specification. Instead, the availability information of the instance is presented to the tenant by using a computing power unit. Specifically, a cloud management platform determines a host that is in an infrastructure and that meets a scenario requirement entered by the tenant, where the host that meets the scenario requirement includes different computing power, packet sending and receiving capabilities, bandwidth capabilities, and the like. To facilitate selection of instances with a same capability by the tenant, the cloud management platform does not present, to the tenant in a form of an instance specification, but presents, to the tenant in a form of a computing power unit, availability information of an instance on the host that meets the scenario requirement.

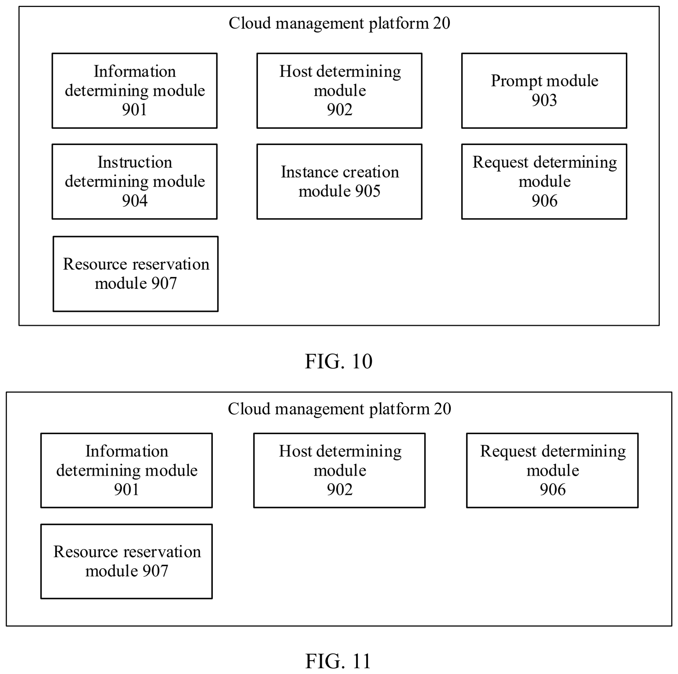

This application further provides a cloud management platform. Refer to FIG. 10. FIG. 10 is a diagram of a structure of a cloud management platform according to an embodiment of the present invention. Specifically, the following modules are included:
an information determining module 901, where the information determining module 901 is configured to determine scenario information entered by a tenant, where the scenario information includes a scenario requirement of a to-be-created virtual instance; and the information determining module is further configured to determine availability zone information entered by the tenant, where the availability zone information indicates an availability zone selected by the tenant;
a host determining module 902, where the host determining module 902 is configured to determine a host capable of meeting the scenario requirement in the plurality of hosts in the infrastructure;
a prompt module 903, where the prompt module 903 is configured to prompt the tenant with availability information of an instance on the host capable of meeting the scenario requirement before the cloud management platform receives a virtual instance creation instruction entered by the tenant for the virtual instance;
an instruction determining module 904, where the instruction determining module 904 is configured to determine the virtual instance creation instruction entered by the tenant, where the virtual instance creation instruction is entered by the tenant when the tenant determines that the host is available;
an instance creation module 905, where the instance creation module 905 is configured to: select a target host from the plurality of hosts based on the virtual instance creation instruction, and create the virtual instance on the target host;
a request determining module 906, where the request determining module 906 is configured to determine a resource reservation request entered by the tenant, where the resource reservation request includes a resource requirement of the to-be-created virtual instance; and the request determining module is further configured to determine a reserved instance request entered by the tenant, where the reserved instance request includes a resource pool requirement of the to-be-created virtual instance; and
a resource reservation module 907, where the resource reservation module 907 is configured to select, from the plurality of hosts in the infrastructure, at least one host capable of meeting the scenario requirement, to reserve, for the tenant, a resource that matches the resource requirement.

It should be noted that the tenant in the foregoing embodiment may be replaced with a plurality of other tenants, and the foregoing modules may implement corresponding technical functions. This is not limited in embodiments of the present invention.

This application further provides another cloud management platform. Refer to FIG. 11. FIG. 11 is a diagram of a structure of another cloud management platform according to an embodiment of the present invention. Specifically, the following modules are included:
an information determining module 901, where the information determining module 901 is configured to determine scenario information entered by a tenant, where the scenario information includes a scenario requirement of a to-be-created virtual instance; and the information determining module is further configured to determine availability zone information entered by the tenant, where the availability zone information indicates an availability zone selected by the tenant;
a host determining module 902, where the host determining module 902 is configured to determine a host capable of meeting the scenario requirement in the plurality of hosts in the infrastructure;
a request determining module 906, where the request determining module 906 is configured to determine a resource reservation request entered by the tenant, where the resource reservation request includes a resource requirement of the to-be-created virtual instance; and
a resource reservation module 907, where the resource reservation module 907 is configured to select, from the plurality of hosts in the infrastructure, at least one host capable of meeting the scenario requirement, to reserve, for the tenant, a resource that matches the resource requirement.

In the foregoing two cloud management platforms, the information determining module 901, the host determining module 902, the prompt module 903, the instruction determining module 904, the instance creation module 905, the request determining module 906, and the resource reservation module 907 may all be implemented by software, or may be implemented by hardware. For example, the following uses the information determining module 901 as an example to describe an implementation of the information determining module 901. Similarly, for implementations of the host determining module 902, the prompt module 903, the instruction determining module 904, the instance creation module 905, the request determining module 906, and the resource reservation module 907, refer to the implementation of the information determining module 901.

The module is used as an example of a software functional unit, and the information determining module 901 may include code running on a computing instance. The computing instance may include at least one of a physical host (a computing device), a virtual machine, and a container. Further, there may be one or more computing instances. For example, the information determining module 901 may include code running on a plurality of hosts/virtual machines/containers. It should be noted that the plurality of hosts/virtual machines/containers used for running the code may be distributed in a same region, or may be distributed in different regions. Further, the plurality of hosts/virtual machines/containers used for running the code may be distributed in a same availability zone, or may be distributed in different availability zones. Each availability zone includes one data center or a plurality of data centers that are geographically close to each other. Generally, one region may include a plurality of availability zones.

The module is used as an example of a hardware functional unit, and the information determining module 901 may include at least one computing device like a server. Alternatively, the information determining module 901 may be a device implemented by using an application-specific integrated circuit (application-specific integrated circuit, ASIC), a programmable logic device (programmable logic device, PLD), or the like. The PLD may be a complex programmable logic device (complex programmable logic device, CPLD), a field-programmable gate array (field-programmable gate array, FPGA), a generic array logic (generic array logic, GAL), or any combination thereof.

It should be noted that, in another embodiment, the information determining module 901 may be configured to perform any step in the cloud resource capacity management method, the host determining module 902 may be configured to perform any step in the cloud resource capacity management method, the prompt module 903 may be configured to perform any step in the cloud resource capacity management method, the instruction determining module 904 may be configured to perform any step in the cloud resource capacity management method, the instance creation module 905 may be configured to perform any step in the cloud resource capacity management method, the request determining module 906 may be configured to perform any step in the cloud resource capacity management method, and the resource reservation module 907 may be configured to perform any step in the cloud resource capacity management method. Steps implemented by the information determining module 901, the host determining module 902, the prompt module 903, the instruction determining module 904, the instance creation module 905, the request determining module 906, and the resource reservation module 907 may be specified as required. The information determining module 901, the host determining module 902, the prompt module 903, the instruction determining module 904, the instance creation module 905, the request determining module 906, and the resource reservation module 907 separately implement different steps in the cloud resource capacity management method to implement all functions of the cloud management platform.

The foregoing describes in detail the method, the apparatus, and the system in embodiments of this application. To better implement the foregoing solutions in embodiments of this application, correspondingly, the following further provides a related device configured to cooperate in implementing the foregoing solutions.

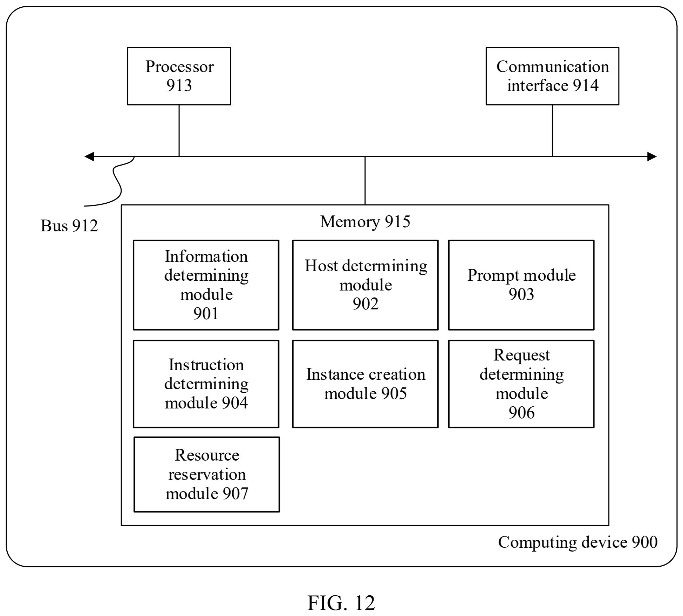

This application provides a computing device. Refer to FIG. 12. FIG. 12 is a diagram of a structure of a computing device for a cloud resource capacity management method according to an embodiment of the present invention. A computing device 900 includes a bus 912, a processor 913, a memory 915, and a communication interface 914. The processor 913, the memory 915, and the communication interface 914 communicate with each other through the bus 912. The computing device 900 may be a server or a terminal device. It should be understood that a quantity of processors and a quantity of memories in the computing device 900 are not limited in this application.

The bus 912 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by only one line in FIG. 12. However, this does not indicate that there is only one bus or only one type of bus. The bus 912 may include a path for transferring information between components (for example, the memory 915, the processor 913, and the communication interface 914) of the computing device 900.

The processor 913 may include any one or more of processors such as a central processing unit (central processing unit, CPU), a graphics processing unit (graphics processing unit, GPU), a micro processor (micro processor, MP), and a digital signal processor (digital signal processor, DSP).

The memory 915 may include a volatile memory (volatile memory), for example, a random access memory (random access memory, RAM). The processor 913 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 915 stores executable program code. The processor 913 executes the executable program code to separately implement functions of the information determining module 901, the host determining module 902, the prompt module 903, the instruction determining module 904, the instance creation module 905, the request determining module 906, and the resource reservation module 907, to implement the cloud resource capacity management method. In other words, the memory 915 stores instructions used by the cloud management platform to perform the cloud resource capacity management method.

The communication interface 914 uses a transceiver module, for example but not limited to, a network interface card or a transceiver, to implement communication between the computing device 900 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

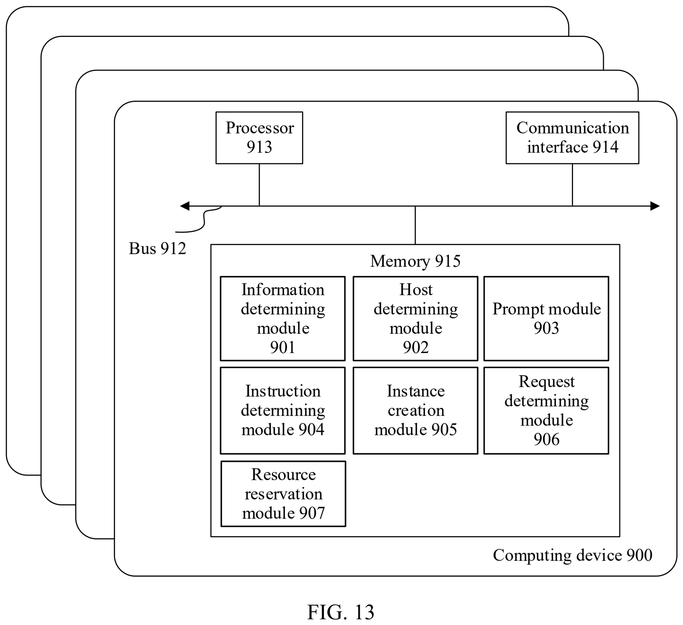

Refer to FIG. 13. FIG. 13 is a diagram of a structure of a computing device cluster for a cloud resource capacity management method according to an embodiment of this application. As shown in FIG. 13, the computing device cluster includes at least one computing device 900, and memories 915 in one or more computing devices 900 in the computing device cluster may store same instructions used by a cloud management platform to perform the cloud resource capacity management method.

In some possible implementations, one or more computing devices 900 in the computing device cluster may alternatively be configured to execute some instructions used by the cloud management platform to perform the cloud resource capacity management method. In other words, a combination of one or more computing devices 900 may jointly execute instructions used by the cloud management platform to perform the cloud resource capacity management method.

It should be noted that memories 915 in different computing devices 900 in the computing device cluster may store different instructions, to perform some functions of the cloud management platform. In other words, instructions stored in the memories 915 in different computing devices 900 may implement functions of one or more modules in the information determining module 901, the host determining module 902, the prompt module 903, the instruction determining module 904, the instance creation module 905, the request determining module 906, and the resource reservation module 907.

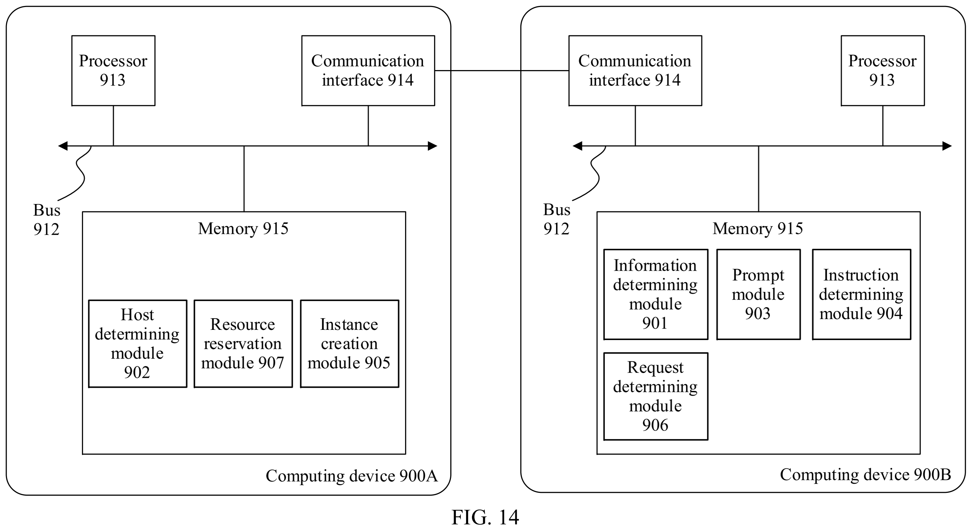

Refer to FIG. 14. FIG. 14 is another diagram of a structure of a computing device cluster for a cloud resource capacity management method according to an embodiment of this application. As shown in FIG. 14, two computing devices 900A and 900B are connected through a communication interface 914. A memory in the computing device 900A stores instructions for executing the prompt module 903, the instance creation module 905, and the resource reservation module 907. A memory in the computing device 900B stores instructions for executing functions of the information determining module 901, the host determining module 902, the instruction determining module 904, and the request determining module 906. In other words, the memories 915 of the computing devices 900A and 900B jointly store instructions used by the cloud management platform to perform the cloud resource capacity management method.

A connection manner in the computing device cluster shown in FIG. 14 may be as follows: In the cloud resource capacity management method provided in this application, the host determining module 902, the instance creation module 905, and the resource reservation module 907 need the cloud management platform to determine a host in an infrastructure based on a scenario requirement, availability zone information, and the like that are entered by a tenant, and a large amount of computing and communication interaction with the infrastructure are required. To maintain efficient and low-delay interaction between the tenant and the information determining module 901, the prompt module 903, the instruction determining module 904, and the request determining module 906, and avoid an overloaded operation of the computing device 900B, functions implemented by the information determining module 901, the prompt module 903, the instruction determining module 904, and the request determining module 906 are executed by the computing device 900B, and other modules are executed by computing device 900A.

It should be understood that functions of the computing device 900A shown in FIG. 14 may alternatively be completed by a plurality of computing devices 900. Similarly, functions of the computing device 900B may alternatively be completed by a plurality of computing devices 900.

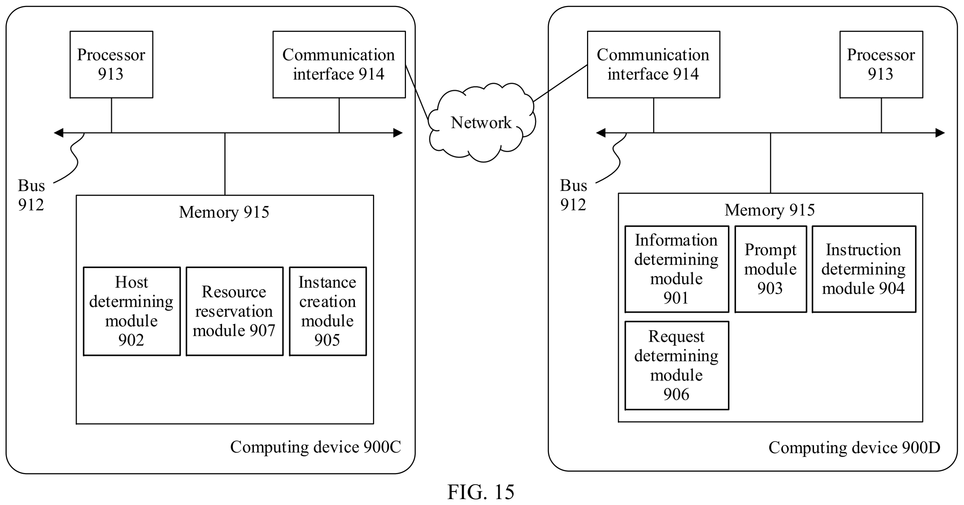

Refer to FIG. 15. FIG. 15 is another diagram of a structure of a computing device cluster for a cloud resource capacity management method according to an embodiment of this application. In some possible implementations, one or more computing devices in the computing device cluster may be connected through a network. The network may be a wide area network, a local area network, or the like. FIG. 15 shows a possible implementation. As shown in FIG. 15, two computing devices 900C and 900D are connected through a network. Specifically, each computing device is connected to the network through a communication interface of the computing device. In this possible implementation, a memory 915 in the computing device 900C stores instructions for executing the host determining module 902, the instance creation module 905, and the resource reservation module 907. In addition, a memory 915 in the computing device 900D stores instructions for executing functions of the information determining module 901, the prompt module 903, the instruction determining module 904, and the request determining module 906.

A connection manner in the computing device cluster shown in FIG. 15 may be as follows: In the cloud resource capacity management method provided in this application, the host determining module 902, the instance creation module 905, and the resource reservation module 907 need the cloud management platform to determine a host in an infrastructure based on a scenario requirement, availability zone information, and the like that are entered by a tenant, and a large amount of computing and communication interaction with the infrastructure are required. In addition, a network connection is required to independently perform the functions. To achieve optimal storage and computing performance, it is considered that a function of interacting with a user by the information determining module 901, the prompt module 903, the instruction determining module 904, and the request determining module 906 is executed by the computing device 900D.

It should be understood that functions of the computing device 900C shown in FIG. 15 may alternatively be completed by a plurality of computing devices 900. Similarly, functions of the computing device 900D may alternatively be completed by a plurality of computing devices 900.

In some possible implementations, the memory 915 of the one or more computing devices 900 in the computing device cluster may alternatively store some instructions used to perform the cloud resource capacity management method. In other words, a combination of one or more computing devices 900 may jointly execute instructions for performing the cloud resource capacity management method.

An embodiment of this application further provides a computer program product including instructions. The computer program product may be a software or program product that includes instructions and that can be run on a computing device or stored in any usable medium. When the computer program product runs on at least one computing device, the at least one computing device is enabled to perform the cloud resource capacity management method applied to the cloud management platform.

An embodiment of this application further provides a computer-readable storage medium. The computer-readable storage medium may be any usable medium that can be stored by a computing device, or a data storage device like a data center including one or more usable media. The usable medium may be a magnetic medium (for example, a floppy disk, a hard disk, or a magnetic tape), an optical medium (for example, a DVD), a semiconductor medium (for example, a solid state disk), or the like. The computer-readable storage medium includes instructions, and the instructions instruct the computing device to perform the cloud resource capacity management method applied to the cloud management platform.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of the present invention.

It may be clearly understood by a person skilled in the art that, for a detailed working process of the foregoing system, apparatus, and unit, refer to a corresponding process in the foregoing method embodiments, and details are not described herein again.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A cloud resource capacity management method, wherein the method is applied to a cloud management platform, the cloud management platform is configured to manage an infrastructure, the infrastructure comprises a plurality of hosts, and the method comprises:
determining, by the cloud management platform, scenario information entered by a tenant, wherein the scenario information comprises a scenario requirement of a to-be-created virtual instance;
determining, by the cloud management platform, a host capable of meeting the scenario requirement in the plurality of hosts in the infrastructure; and
prompting, by the cloud management platform, the tenant with availability information of an instance on the host before receiving a virtual instance creation instruction entered by the tenant for the virtual instance.

2. The method according to claim 1, wherein the plurality of hosts are disposed in a same availability zone in the infrastructure, the infrastructure is provided with a plurality of different availability zones, and the method further comprises:
determining, by the cloud management platform, availability zone information entered by the tenant, wherein the availability zone information indicates the availability zone selected by the tenant; and
determining, by the cloud management platform, the host capable of meeting the scenario requirement in the plurality of hosts in the infrastructure comprises:
determining, by the cloud management platform, the host capable of meeting the scenario requirement in the plurality of hosts disposed in the availability zone in the infrastructure.

3. The method according to claim 1, wherein the method further comprises:
determining, by the cloud management platform, a reserved instance request entered by the tenant, wherein the reserved instance request comprises a resource pool requirement of the to-be-created virtual instance; and
determining, by the cloud management platform, the host capable of meeting the scenario requirement in the plurality of hosts in the infrastructure comprises:
determining, by the cloud management platform, a host capable of meeting the resource pool requirement and the scenario requirement in the plurality of hosts in the infrastructure.

4. The method according to any one of claims 1 to 3, wherein the method further comprises:
determining, by the cloud management platform, the virtual instance creation instruction entered by the tenant, wherein the virtual instance creation instruction is entered by the tenant when the tenant determines that the host is available; and
selecting, by the cloud management platform, a target host from the plurality of hosts based on the virtual instance creation instruction, and creating the virtual instance on the target host.

5. The method according to any one of claims 1 to 3, wherein prompting, by the cloud management platform, the tenant with the availability information of the instance on the host before receiving the virtual instance creation instruction entered by the tenant for the virtual instance comprises:
when the host is unavailable, prompting, by the cloud management platform, the tenant with a sellout of the instance on the host capable of meeting the scenario requirement.

6. The method according to any one of claims 1 to 5, wherein the method further comprises:
determining, by the cloud management platform, a resource reservation request entered by the tenant, wherein the resource reservation request comprises a resource requirement of the to-be-created virtual instance; and
selecting, by the cloud management platform from the plurality of hosts in the infrastructure, at least one host capable of meeting the scenario requirement, to reserve, for the tenant, a resource that matches the resource requirement.

7. The method according to any one of claims 1 to 6, wherein the availability information comprises one or any combination of sellout information, a host evaluation, capacity information, and a risk identifier.

8. The method according to any one of claims 1 to 7, wherein the scenario requirement comprises one or any combination of a fault domain, a deployment set, a health status of the host, a model of the host, a network type, and a storage type.

9. The method according to any one of claims 1 to 8, wherein the virtual instance comprises any one of a virtual machine, a container, a database, a bare metal server, an object storage bucket, an ELB elastic load balancer, a cloud gateway, and a cloud cache.

10. A cloud resource capacity management method, wherein the method is applied to a cloud management platform, the cloud management platform is configured to manage an infrastructure, the infrastructure comprises a plurality of hosts, and the method comprises:
determining, by the cloud management platform, scenario information entered by a tenant, wherein the scenario information comprises a scenario requirement of a to-be-created virtual instance;
determining, by the cloud management platform, a host capable of meeting the scenario requirement in the plurality of hosts in the infrastructure;
determining, by the cloud management platform, a resource reservation request entered by the tenant, wherein the resource reservation request comprises a resource requirement of the to-be-created virtual instance; and
selecting, by the cloud management platform from the plurality of hosts in the infrastructure, at least one host capable of meeting the scenario requirement, to reserve, for the tenant, a resource that matches the resource requirement.

11. The method according to claim 10, wherein the plurality of hosts are disposed in a same availability zone in the infrastructure, the infrastructure is provided with a plurality of different availability zones, and the method further comprises:
determining, by the cloud management platform, availability zone information entered by the tenant, wherein the availability zone information indicates the availability zone selected by the tenant; and
determining, by the cloud management platform, the host capable of meeting the scenario requirement in the plurality of hosts in the infrastructure comprises:
determining, by the cloud management platform, the host capable of meeting the scenario requirement in the plurality of hosts disposed in the availability zone in the infrastructure.

12. The method according to claim 10 or 11, wherein the scenario requirement comprises one or any combination of a fault domain, a deployment set, a health status of the host, a model of the host, a network type, and a storage type.

13. The method according to any one of claims 10 to 12, wherein the virtual instance comprises any one of a virtual machine, a container, a database, a bare metal server, an object storage bucket, an ELB elastic load balancer, a cloud gateway, and a cloud cache.

14. A cloud management platform, wherein the cloud management platform is configured to manage an infrastructure, the infrastructure comprises a plurality of hosts, and the cloud management platform comprises:
an information determining module, wherein the information determining module is configured to determine scenario information entered by a tenant, wherein the scenario information comprises a scenario requirement of a to-be-created virtual instance;
a host determining module, wherein the host determining module is configured to determine a host capable of meeting the scenario requirement in the plurality of hosts in the infrastructure; and
a prompt module, wherein the prompt module is configured to prompt the tenant with availability information of an instance on the host before the cloud management platform receives a virtual instance creation instruction entered by the tenant for the virtual instance.

15. The cloud management platform according to claim 14, wherein the plurality of hosts are disposed in a same availability zone in the infrastructure, and the infrastructure is provided with a plurality of different availability zones;
the information determining module is further configured to determine availability zone information entered by the tenant, wherein the availability zone information indicates the availability zone selected by the tenant; and
that the host determining module is configured to determine the host capable of meeting the scenario requirement in the plurality of hosts in the infrastructure comprises:
the host determining module is specifically configured to determine the host capable of meeting the scenario requirement in the plurality of hosts disposed in the availability zone in the infrastructure.

16. The cloud management platform according to claim 14, wherein the cloud management platform further comprises:
a request determining module, wherein the request determining module is configured to determine a reserved instance request entered by the tenant, wherein the reserved instance request comprises a resource pool requirement of the to-be-created virtual instance; and
that the host determining module is configured to determine the host capable of meeting the scenario requirement in the plurality of hosts in the infrastructure comprises:
the host determining module is specifically configured to determine a host capable of meeting the resource pool requirement and the scenario requirement in the plurality of hosts in the infrastructure.

17. The cloud management platform according to any one of claims 14 to 16, wherein the cloud management platform further comprises:
an instruction determining module, wherein the instruction determining module is configured to determine the virtual instance creation instruction entered by the tenant, wherein the virtual instance creation instruction is entered by the tenant when the tenant determines that the host is available; and
an instance creation module, wherein the instance creation module is configured to: select a target host from the plurality of hosts based on the virtual instance creation instruction, and create the virtual instance on the target host.

18. The cloud management platform according to any one of claims 14 to 16, wherein the prompt module is configured to prompt the tenant with the availability information of the instance on the host before the cloud management platform receives the virtual instance creation instruction entered by the tenant for the virtual instance, and
when the host is unavailable, the prompt module is specifically configured to prompt the tenant with a sellout of the instance on the host capable of meeting the scenario requirement.

19. The cloud management platform according to any one of claims 14 to 18, wherein the cloud management platform further comprises:
a request determining module, wherein the request determining module is configured to determine a resource reservation request entered by the tenant, wherein the resource reservation request comprises a resource requirement of the to-be-created virtual instance; and
a resource reservation module, wherein the resource reservation module is configured to select, from the plurality of hosts in the infrastructure, at least one host capable of meeting the scenario requirement, to reserve, for the tenant, a resource that matches the resource requirement.

20. The cloud management platformaccording to any one of claims 14 to 19, wherein the availability information comprises one or any combination of sellout information, a host evaluation, capacity information, and a risk identifier.

21. The cloud management platform according to any one of claims 14 to 20, wherein the scenario requirement comprises one or any combination of a fault domain, a deployment set, a health status of the host, a model of the host, a network type, and a storage type.

22. The cloud management platform according to any one of claims 14 to 21, wherein the virtual instance comprises any one of a virtual machine, a container, a database, a bare metal server, an object storage bucket, an ELB elastic load balancer, a cloud gateway, and a cloud cache.

23. A cloud management platform, wherein the cloud management platform is configured to manage an infrastructure, the infrastructure comprises a plurality of hosts, and the cloud management platform comprises:
an information determining module, wherein the information determining module is configured to determine scenario information entered by a tenant, wherein the scenario information comprises a scenario requirement of a to-be-created virtual instance;
a host determining module, wherein the host determining module is configured to determine a host capable of meeting the scenario requirement in the plurality of hosts in the infrastructure;
a request determining module, wherein the request determining module is configured to determine a resource reservation request entered by the tenant, wherein the resource reservation request comprises a resource requirement of the to-be-created virtual instance; and
a resource reservation module, wherein the resource reservation module is configured to select, from the plurality of hosts in the infrastructure, at least one host capable of meeting the scenario requirement, to reserve, for the tenant, a resource that matches the resource requirement.

24. The cloud management platform according to claim 23, wherein the plurality of hosts are disposed in a same availability zone in the infrastructure, and the infrastructure is provided with a plurality of different availability zones;
the information determining module is further configured to determine availability zone information entered by the tenant, wherein the availability zone information indicates the availability zone selected by the tenant; and
that the host determining module is configured to determine the host capable of meeting the scenario requirement in the plurality of hosts in the infrastructure comprises:
the host determining module is specifically configured to determine the host capable of meeting the scenario requirement in the plurality of hosts disposed in the availability zone in the infrastructure.

25. The cloud management platform according to claim 23 or 24, wherein the scenario requirement comprises one or any combination of a fault domain, a deployment set, a health status of the host, a model of the host, a network type, and a storage type.

26. The cloud management platform according to any one of claims 23 to 25, wherein the virtual instance comprises any one of a virtual machine, a container, a database, a bare metal server, an object storage bucket, an ELB elastic load balancer, a cloud gateway, and a cloud cache.

27. A computing device cluster, comprising at least one computing device, wherein each computing device comprises a processor and a memory; and
the processor of the at least one computing device is configured to execute instructions stored in the memory of the at least one computing device, so that the computing device cluster performs the method according to any one of claims 1 to 9 or claims 10 to 13.

28. A computer program product comprising instructions, wherein when the instructions are run by a computer device cluster, the computing device cluster is enabled to perform the method according to any one of claims 1 to 9 or claims 10 to 13.

29. A computer-readable storage medium, comprising computer program instructions, wherein when the computer program instructions are executed by a computing device cluster, the computing device cluster performs the method according to claims 1 to 9 or claims 10 to 13.
